# EUROPÄISCHE PATENTSCHRIFT

(11) **EP 2 874 325 B1**
(45) Veröffentlichungstag und Bekanntmachung des Hinweises auf die Patenterteilung: **27.04.2016**
(21) Anmeldenummer: 14179225.9
(22) Anmeldetag: 31.07.2014
(51) Int. Cl.: H04B 3/56

(54) **Vorrichtung zur MIMO-Einkopplung von Powerline-Signalen über zwei Kanäle in ein Dreileiter-Stromversorgungsnetz**
Device for MIMO coupling of power line signals on two channels into a three conductor power supply network
Dispositif de couplage MIMO de signaux de ligne électrique par deux canaux dans un réseau d'alimentation électrique triphasé

(30) Priorität: 19.11.2013 DE 102013019287
(43) Veröffentlichungstag der Anmeldung: 20.05.2015
(73) Patentinhaber: Devolo AG, 52068 Aachen (DE)
(72) Erfinder: Jagalla, Gerhard, 52457 Aldenhoven (DE); Thiel, Stephan, 52070 Aachen (DE)
(74) Vertreter: Cohausz & Florack

(56) Entgegenhaltungen:
- EP-A1- 2 525 503
- US-A1- 2014 112 400
- "PowerLine Telecommunications (PLT); MIMO PLT Part 1: Universal Coupler, Operating Instructions - Description;00034v113", ETSI DRAFT; 00034V113, EUROPEAN TELECOMMUNICATIONS STANDARDS INSTITUTE (ETSI), 650, ROUTE DES LUCIOLES ; F-06921 SOPHIA-ANTIPOLIS ; FRANCE, Bd. PLT, Nr. V1.1.3, 12. Juli 2011 (2011-07-12), Seiten 1-25, XP014097419, [gefunden am 2011-07-12]

## Beschreibung

Der Gegenstand betrifft eine Vorrichtung zur Kopplung eines Modems an ein Stromversorgungsnetz zur Übertragung von Daten über das Stromversorgungsnetz.

Powerline Kommunikation (PLC) ist eine Technologie, die Daten über Energieversorgungsnetze überträgt. Ein Energieversorgungsnetz kann dabei die hausinterne Niederspannungsinstallation ebenso sein, wie das Versorgungsnetz außerhalb des Hauses, oder die Mittel- und Hochspannungsleitungen, in den großen Verbundnetzen der Energieversorger.

Die PLC moduliert dazu die zu übertragenen Daten als Hochfrequenzsignal auf die elektrischen Leitungen des Energieversorgungsnetzes. Die dabei verwendeten Frequenzen liegen im aktuellen, technischen Implementierungen im Bereich zwischen 9kHz und 100MHz, wobei dieser Frequenzbereich auch noch nach oben und/oder unten erweitert werden kann. "Diversity" (engl. Vielfältigkeit) beschreibt im Zusammenhang mit der PLC-Technologie die Übertragung von PLC-Signalen unter Zuhilfenahme weiterer Leiter.

Aus den zuvor aufgezeigten Nachteilen lag dem Gegenstand die Aufgabe zugrunde, eine Vorrichtung zur Erzielung von Diversity für PLC-Systeme zu schaffen, welche eine einfache Implementierung ermöglicht.

Ein Beispiel aus dem Stand der Technik kann in EP 2 525 503 gefunden werden.

Diese Aufgabe wird gegenständlich gelöst durch eine Vorrichtung zur Kopplung eines Modems an ein Stromversorgungsnetz zur Übertragung von Daten über das Stromversorgungsnetz, umfassend: einen Netzanschluss, welcher dazu eingerichtet ist, die Vorrichtung mit einem Phasenleiter, einen Neutralleiter und einen Schutzleiter des Stromversorgungsnetzes zu verbinden, ein erstes Transformatorelement , umfassend eine primärseitige Wicklung, eine erste sekundärseitige Wicklung und eine zweite sekundärseitige Wicklung, ein zweites Transformatorelement, umfassend eine primärseitige Wicklung, eine erste sekundärseitige Wicklung und eine zweite sekundärseitige Wicklung, wobei die primärseitige Wicklung des ersten Transformatorelements mit der primärseitigen Wicklung des zweiten Transformatorelements in Reihe verbunden ist, wobei die erste sekundärseitige Wicklung des zweiten Transformatorelements mit der zweiten sekundärseitigen Wicklung des ersten Transformatorelements in Reihe verbunden ist, wobei die erste sekundärseitige Wicklung des ersten Transformatorelements mit der zweiten sekundärseitigen Wicklung des zweiten Transformatorelements in Reihe verbunden ist, wobei die Vorrichtung einen ersten primärseitigen Kontakt umfasst, welcher an dem der primärseitigen Wicklung des zweiten Transformatorelements abgewandten Ende der primärseitigen Wicklung des ersten Transformatorelements angeordnet ist, und einen zweiten primärseitigen Kontakt umfasst, welcher an dem der primärseitigen Wicklung des ersten Transformatorelements abgewandten Ende der primärseitigen Wicklung des zweiten Transformatorelements angeordnet ist, und einen dritten primärseitigen Kontakt umfasst, welcher zwischen der primärseitigen Wicklung des ersten Transformatorelements und der primärseitigen Wicklung des zweiten Transformatorelements angeordnet ist, und einen ersten sekundärseitigen Kontakt umfasst, welcher an dem der zweiten sekundärseitigen Wicklung des zweiten Transformatorelements abgewandten Ende der ersten sekundärseitigen Wicklung des ersten Transformatorelements angeordnet ist, und einen zweiten sekundärseitigen Kontakt umfasst, welcher an dem der ersten sekundärseitigen Wicklung des ersten Transformatorelements abgewandten Ende der zweiten sekundärseitigen Wicklung des zweiten Transformatorelements angeordnet ist, und einen dritten sekundärseitigen Kontakt umfasst, welcher an dem der ersten sekundärseitigen Wicklung des zweiten Transformatorelements abgewandten Ende der zweiten sekundärseitigen Wicklung des ersten Transformatorelements angeordnet ist, und einen vierten sekundärseitigen Kontakt umfasst, welcher an dem der zweiten sekundärseitigen Wicklung des ersten Transformatorelements abgewandten Ende der ersten sekundärseitigen Wicklung des zweiten Transformatorelements angeordnet ist, wobei der erste primärseitige Kontakt, der zweite primärseitige Kontakt und der dritte primärseitige Kontakt jeweils dazu eingerichtet sind, über den Netzanschluss mit jeweils einem verschiedenen Leiter aus einem Phasenleiter, einem Neutralleiter und einem Schutzleiter des Stromversorgungsnetzes verbunden zu werden, wobei die Vorrichtung dazu eingerichtet ist, einen ersten sekundärseitigen Übertragungskanal, welcher zwischen dem ersten und dem zweiten sekundärseitigen Kontakt ausgebildet ist, über das erste und das zweite Transformatorelement mit dem Stromversorgungsnetz zumindest hochfrequenzmäßig zu koppeln; und wobei die Vorrichtung dazu eingerichtet ist, einen zweiten sekundärseitigen Übertragungskanal, welcher zwischen dem dritten und dem vierten sekundärseitigen Kontakt ausgebildet ist, über das erste und das zweite Transformatorelement mit dem Stromversorgungsnetz zumindest hochfrequenzmäßig zu koppeln.

Diese Aufgabe wird ferner gegenständlich gelöst durch ein Modem zur Übertragung von Daten über ein Stromversorgungsnetz, umfassend die zuvor beschriebene Vorrichtung, wobei das Modem mit dem ersten und zweiten sekundärseitigen Kontakt der Vorrichtung zur Kopplung des Modems über den ersten Übertragungskanal und das Modem mit dem dritten und vierten sekundärseitigen Kontakt zur Kopplung des Modems über den zweiten Übertragungskanal an das Stromversorgungsnetz verbunden ist.

Das Modem stellt daher ein PLC-Modem dar, welches zur Übertragung von Daten über ein Stromversorgungsnetz eingerichtet ist.

Beispielsweise kann der Netzanschluss einen ersten Kontakt aufweisen, welcher mit dem ersten primärseitigen Kontakt verbunden ist, und einen zweiten Kontakt aufweisen, welcher mit dem zweiten primärseitigen Kontakt verbunden ist, und einen dritten Kontakt aufweisen, welcher mit dem dritten primärseitigen Kontakt verbunden ist, wobei der erste Kontakt, der zweite Kontakt und der dritte Kontakt des Netzanschlusses mit jeweils einem verschiedenen Leiter aus Phasenleiter, Neutralleiter und Schutzleiter des Stromversorgungsnetzes verbunden wird, wenn der Netzanschluss an das Stromversorgungsnetz angeschlossen wird. Beispielsweise kann der Anschluss einen Netzstecker darstellen oder mit einem Netzstecker verbunden sein. An den ersten und zweiten sekundärseitigen Kontakt und an den dritten und vierten sekundärseitigen Kontakt kann beispielsweise ein PLC-Modem zur Ein- und/oder Auskopplung von PLC-Signalen angeschlossen werden.

Die Vorrichtung umfasst ein erstes Transformatorelement, welches eine primärseitige Wicklung, eine erste sekundärseitige Wicklung und eine zweite sekundärseitige Wicklung umfasst. Somit ist die primärseitige Wicklung des ersten Transformatorelements sowohl mit der ersten sekundärseitigen Wicklung als auch mit der zweiten sekundärseitigen Wicklung des ersten Transformatorelements induktiv gekoppelt. Beispielsweise können die primärseitige Wicklung, die erste sekundärseitige Wicklung und die zweite sekundärseitige Wicklung des ersten Transformatorelements derart auf einem gemeinsamen Transformatorkern angeordnet sein, dass durch die primärseitige Wicklung, die erste sekundärseitige Wicklung und die zweite sekundärseitige Wicklung des ersten Transformatorelements im wesentlichen der gleiche erste Magnetfluss fließt.

Die Vorrichtung umfasst ferner ein zweites Transformatorelement, welches eine primärseitige Wicklung, eine erste sekundärseitige Wicklung und eine zweite sekundärseitige Wicklung umfasst. Somit ist die primärseitige Wicklung des zweiten Transformatorelements sowohl mit der ersten sekundärseitigen Wicklung als mit der zweiten sekundärseitigen Wicklung des zweiten Transformatorelements induktiv gekoppelt. Beispielsweise können die primärseitige Wicklung, die erste sekundärseitige Wicklung und die zweite sekundärseitige Wicklung des zweiten Transformatorelements derart auf einem gemeinsamen Transformatorkern angeordnet sein, dass durch die primärseitige Wicklung, die erste sekundärseitige Wicklung und die zweite sekundärseitige Wicklung des zweiten Transformatorelements im wesentlichen der gleiche zweite Magnetfluss fließt. Vorzugsweise kann dieser zweite Magnetfluss im wesentlichen oder vollständig vom ersten Magnetfluss, welcher durch die primärseitige Wicklung, die erste sekundärseitige Wicklung und die zweite sekundärseitige Wicklung des ersten Transformatorelements fließt, entkoppelt sein.

Beispielsweise können das erste Transformatorelement und das zweite Transformatorelement jeweils getrennt voneinander ausgebildete Transformatoren darstellen. Das erste Transformatorelement und das zweite Transformatorelement können jedoch beispielsweise auch jeweils Teil eine Mehrlochkerntransformators, wie beispielsweise ein Doppellochkerntransformator, darstellen.

Die primärseitige Wicklung des ersten Transformatorelements ist mit der primärseitigen Wicklung des zweiten Transformatorelements in Reihe verbunden und die erste sekundärseitige Wicklung des zweiten Transformatorelements ist mit der zweiten sekundärseitigen Wicklung des ersten Transformatorelements in Reihe verbunden. Ferner ist die erste sekundärseitige Wicklung des ersten Transformatorelements mit der zweiten sekundärseitigen Wicklung des zweiten Transformatorelements in Reihe verbunden ist.

Ferner umfasst die Vorrichtung einen ersten primärseitigen Kontakt, welcher an dem der primärseitigen Wicklung des zweiten Transformatorelements abgewandten Ende der primärseitigen Wicklung des ersten Transformatorelements angeordnet ist, einen zweiten primärseitigen Kontakt, welcher an dem der primärseitigen Wicklung des ersten Transformatorelements abgewandten Ende der primärseitigen Wicklung des zweiten Transformatorelements angeordnet ist, und einen dritten primärseitigen Kontakt, welcher zwischen der primärseitigen Wicklung des ersten Transformatorelements und der primärseitigen Wicklung des zweiten Transformatorelements angeordnet ist.

Der erste primärseitige Kontakt und der zweite primärseitige Kontakt sind dazu eingerichtet ist, über den Netzanschluss mit jeweils einem verschiedenen Leiter aus einem Phasenleiter und einem Neutralleiter des Stromversorgungsnetzes verbunden zu werden, und der dritte primärseitige Kontakt sind dazu eingerichtet, über den Netzanschluss mit einem Schutzleiter des Stromversorgungsnetzes verbunden zu werden, wie beispielsweise durch Einstecken eines Netzsteckers in eine Steckdose des Stromversorgungsnetzes.

Ferner umfasst die Vorrichtung einen ersten sekundärseitigen Kontakt, welcher an dem der zweiten sekundärseitigen Wicklung des zweiten Transformatorelements abgewandten Ende der ersten sekundärseitigen Wicklung des ersten Transformatorelements angeordnet ist, einen zweiten sekundärseitigen Kontakt, welcher an dem der ersten sekundärseitigen Wicklung des ersten Transformatorelements abgewandten Ende der zweiten sekundärseitigen Wicklung des zweiten Transformatorelements angeordnet, ist, einen dritten sekundärseitigen Kontakt, welcher an dem der ersten sekundärseitigen Wicklung des zweiten Transformatorelements abgewandten Ende der zweiten sekundärseitigen Wicklung des ersten Transformatorelements angeordnet ist, und einen vierten sekundärseitigen Kontakt, welcher an dem der zweiten sekundärseitigen Wicklung des ersten Transformatorelements abgewandten Ende der ersten sekundärseitigen Wicklung des zweiten Transformatorelements angeordnet ist.

Die Vorrichtung ist dazu eingerichtet ist, einen ersten sekundärseitigen Übertragungskanal K1, welcher zwischen dem ersten und dem zweiten sekundärseitigen Kontakt ausgebildet ist, über das erste und das zweite Transformatorelement mit dem Stromversorgungsnetz zumindest hochfrequenzmäßig zu koppeln; und die Vorrichtung ist dazu eingerichtet ist, einen zweiten sekundärseitigen Übertragungskanal K2, welcher zwischen dem dritten und dem vierten sekundärseitigen Kontakt ausgebildet ist, über das erste und das zweite Transformatorelement mit dem Stromversorgungsnetz zumindest hochfrequenzmäßig zu koppeln. Als Hochfrequenz in Zusammenhang mit einer PLC-Übertragung können beispielsweise Frequenzen von mehr als 1kHz, oder mehr als 9kHz, oder mehr als 100kHz, oder mehr als 1MHz betrachtet werden.

Beispielsweise kann ein PLC-Modem zur Ein- oder Auskopplung von PLC-Signalen mit dem ersten und zweiten sekundärseitigen Kontakt der Vorrichtung zur Kopplung des Modems über einen ersten Übertragungskanal K1 über das Stromversorgungsnetz verbunden werden, und das PLC-Modem kann zur Ein- oder Auskopplung von PLC-Signalen mit dem dritten und vierten sekundärseitigen Kontakt zur Kopplung des Modems über einen zweiten Übertragungskanal K2 über das Stromversorgungsnetz verbunden werden. Somit kann über die beiden Übertragungskanäle K1 und K2 beispielsweise eine MIMO (Multi-Input-Multiple-Output) Kopplung des PLC-Modems an das Stromversorgungsnetz erfolgen, wobei z.B. ein Diversity-Gewinn durch die Verwendung der zwei Übertragungskanäle K1 und K2 als zwei unabhängige SISO (Single-Input-Single-Ouput) Kanäle im Rahmen einer Multi-Layer-Übertragung erreicht werden kann. Ferner kann auch beispielsweise die Vorrichtung zur Ausbildung einer Single-Layer-Übertragung mit Diversity-Gewinn verwendet werden, wobei ein Kanal von einem der Typen MIMO, MISO (Multiple-Input-Single-Output) und SIMO (Single-Input-Multiple-Output) mit Hilfe eines Diversity-Verfahrens, wie beispielsweise Maxium Ratio Combining (z.B. Beamforming), Selection Combining oder ein sonstiges geeignetes Diversity-Verfahren, für einen einzigen Datenstream ("Single-Layer-Übertragung") optimiert wird. Hierzu ist beispielsweise das PLC-Modem dazu eingerichtet, solch ein Diversity-Verfahren durchzuführen.

Beispielsweise sind zwischen dem ersten primärseitigen Kontakt und dem ersten Kontakt des Netzanschlusses, zwischen dem zweiten primärseitigen Kontakt und dem dritten Kontakt des Netzanschlusses, und zwischen dem dritten primärseitigen Kontakt und dem zweiten Kontakt des Netzanschlusses keine als Tiefpass wirkenden Bauelemente, wie beispielsweise eine Spule, angeordnet. Zwischen dem ersten primärseitigen Kontakt und dem ersten Kontakt des Netzanschlusses, und/oder zwischen dem zweiten primärseitigen Kontakt und dem dritten Kontakt des Netzanschlusses, und/oder zwischen dem dritten primärseitigen Kontakt und dem zweiten Kontakt des Netzanschlusses kann jedoch vorzugsweise beispielsweise jeweils ein Kondensator, welcher beispielsweise eine Kapazität von 4,7nF oder eine hiervon abweichende Kapazität aufweisen kann, angeordnet sein. Diese Kondensatoren können beispielsweise dazu eingerichtet sein, die 50Hz Netzspannung herausfiltern.

Mit der durch die Vorrichtung beschriebenen Koppelvariante zur Kopplung eines PLC-Modems an ein Stromversorgungsnetz zur Übertragung von Daten über das Stromversorgungsnetz kann auf eine einfache Art und Weise in Diversity-Gewinn durch die Verwendung der zwei Übertragungskanäle erzielt werden.

Gemäß einem vorteilhaften Ausführungsbeispiel wird vorgeschlagen, dass das erste Transformatorelement und das zweite Transformatorelement jeweils Teil eines gemeinsamen Mehrlochkerntransformators sind.

Die primärseitige Wicklung des ersten Transformatorelements und die erste und zweite sekundärseitigen Wicklungen des ersten Transformatorelements können um ein erstes gemeinsames Loch des Mehrlochkerntransformators gewickelt sein. Somit sind die primärseitige Wicklung des ersten Transformatorelements, die erste sekundärseitige Wicklung und die zweite sekundärseitige Wicklung des ersten Transformatorelements derart auf einem Teil des Mehrlochkerns, welcher das erste Loch umgibt, angeordnet, dass durch die primärseitige Wicklung des ersten Transformatorelements, die erste sekundärseitige Wicklung und die zweite primärseitige Wicklung des ersten Transformatorelements im wesentlichen der gleiche erste Magnetfluss fließt.

Die primärseitige Wicklung des zweiten Transformatorelements und die erste und zweite sekundärseitigen Wicklungen des zweiten Transformatorelements sind um ein zweites gemeinsames Loch des Mehrlochkerntransformators gewickelt. Somit sind die primärseitige Wicklung des zweiten Transformatorelements, die erste sekundärseitige Wicklung und die zweite primärseitige Wicklung des zweiten Transformatorelements derart auf einem Teil des Mehrlochkerns, welcher das zweite Loch umgibt, angeordnet, dass durch die primärseitige Wicklung des zweiten Transformatorelements, die erste sekundärseitige Wicklung und die zweite primärseitige Wicklung des zweiten Transformatorelements im wesentlichen der gleiche zweite Magnetfluss fließt.

Vorzugsweise kann dieser zweite Magnetfluss im wesentlichen oder vollständig vom ersten Magnetfluss, welcher durch die primärseitige Wicklung, die erste sekundärseitige Wicklung und die zweite sekundärseitige Wicklung des ersten Transformatorelements fließt, entkoppelt sein.

Durch die Verwendung eines Mehrlochkerntransformators können beispielsweise Kosten gegenüber der Verwendung von zwei einzelnen Transformatoren für das erste bzw. zweite Transformatorelement, reduziert werden, wobei gleichzeitig ein geringerer Platzbedarf erzielt werden kann, da nur ein Übertrager verwendet wird.

Darüber hinaus kann die Verwendung eines Mehrlochkerntransformators verbesserte Breitbandübertragungseigenschaften gegenüber der Verwendung von Einzellochkerntransformatoren ermöglichen, insbesondere wenn beispielsweise eine gute Kopplung zwischen Wicklungen mit einer relativ geringen Wicklungszahl über einen breiten Frequenzbereich gewünscht ist, wie es im Breitbandfrequenzbereich eines PLC-Signals der Fall ist. Ferner kann durch die Verwendung eines Mehrlochkerntransformators eine höhere Signaltrennung zwischen den beiden Übertragungskanälen erzielt werden als bei der Verwendung eines Einzelkerntransformators. Darüber hinaus kann die Verwendung eines Mehrlochkerntransformators kostengünstiger sein und weniger Platz im elektrischen Aufbau, wie beispielsweise auf einer Leiterplatte, benötigen, als bei der Verwendung von Einzelkerntransformatoren.

Der Mehrlochkern des Mehrlochkerntransformators kann beispielsweise genau zwei Löcher aufweisen oder mehr als zwei Löcher aufweisen.

Gemäß einem vorteilhaften Ausführungsbeispiel wird vorgeschlagen, dass der Mehrlochkerntransformator ein Doppellochkerntransformator darstellt, welcher ein erstes Loch und ein zweites Loch aufweist, wobei die primärseitige Wicklung und die erste und zweite sekundärseitigen Wicklungen des ersten Transformatorelements um das erste Loch des Doppellochkerntransformators gewickelt sind, und wobei die primärseitige Wicklung und die erste und zweite sekundärseitigen Wicklungen des zweiten Transformatorelements um das zweites Loch des Doppellochkerntransformators gewickelt sind.

Gemäß einem vorteilhaften Ausführungsbeispiel wird vorgeschlagen, dass die Reihenschaltung aus der ersten sekundärseitigen Wicklung des zweiten Transformatorelements und der zweiten sekundärseitigen Wicklung des ersten Transformatorelements, der Wicklungssinn zwischen der ersten sekundärseitigen Wicklung des zweiten Transformatorelements und der primärseitigen Wicklung des zweiten Tränsformatorelements, und der Wicklungssinn zwischen der zweiten sekundärseitigen Wicklung des ersten Transformatorelements und der primärseitigen Wicklung des ersten Transformatorelements derart ausgestaltet sind, dass eine zwischen dem vierten sekundärseitigen Kontakt und dem dritten sekundärseitigen Kontakt angelegte positive Spannung folgendes bewirkt: (i) Induktion einer ersten Spannung zwischen dem dritten primärseitigen Kontakt und dem ersten primärseitigen Kontakt, (ii) Induktion einer zweiten Spannung zwischen dem zweiten primärseitigen Kontakt und dem dritten primärseitigen Kontakt, wobei die erste Spannung eine umgekehrte Richtung im Vergleich zur Richtung der zweiten Spannung aufweist.

Gemäß einem vorteilhaften Ausführungsbeispiel wird vorgeschlagen, dass die zwischen dem vierten sekundärseitigen Kontakt und dem dritten sekundärseitigen Kontakt angelegte positive Spannung folgendes bewirkt: (i) Induktion der ersten Spannung als negative Spannung zwischen dem dritten primärseitigen Kontakt und dem ersten primärseitigen Kontakt und Induktion der zweiten Spannung als positive Spannung zwischen dem zweiten primärseitigen Kontakt und dem dritten primärseitigen Kontakt; und (ii) Induktion der ersten Spannung als positive Spannung zwischen dem dritten primärseitigen Kontakt und dem ersten primärseitigen Kontakt und Induktion der zweiten Spannung als negative Spannung zwischen dem zweiten primärseitigen Kontakt und dem dritten primärseitigen Kontakt.

Gemäß einem vorteilhaften Ausführungsbeispiel wird vorgeschlagen, dass das Wicklungsverhältnis zwischen der primärseitigen Wicklung des ersten Transformatorelements und der primärseitigen Wicklung des zweiten Transformatorelements, dass das Wicklungsverhältnis zwischen der ersten sekundärseitigen Wicklung des ersten Transformatorelements und der zweiten sekundärseitigen Wicklung des zweiten Transformatorelements, und dass das Wicklungsverhältnis zwischen der zweiten sekundärseitigen Wicklung des ersten Transformatorelements und der ersten sekundärseitigen Wicklung des zweiten Transformatorelements jeweils ein Wicklungsverhältnis von näherungsweise 1:1 aufweisen. Durch diese Wicklungsverhältnisse kann näherungsweise oder vollständige Symmetrie bezüglich der Ein- und/oder Auskopplung erreicht werden.

Gemäß einem vorteilhaften Ausführungsbeispiel wird vorgeschlagen, dass die Reihenschaltung aus der ersten sekundärseitigen Wicklung des ersten Transformatorelements und der zweiten sekundärseitigen Wicklung des zweiten Transformatorelements, der Wicklungssinn zwischen der ersten sekundärseitigen Wicklung des ersten Transformatorelements und der primärseitigen Wicklung des ersten Transformatorelements, und der Wicklungssinn zwischen der zweiten sekundärseitigen Wicklung des zweiten Transformatorelements und der primärseitigen Wicklung des zweiten Transformatorelements derart ausgestaltet sind, dass eine zwischen dem zweiten sekundärseitigen Kontakt und dem ersten sekundärseitigen Kontakt angelegte positive Spannung folgendes bewirkt: (i) Induktion einer ersten Spannung zwischen dem dritten primärseitigen Kontakt und dem ersten primärseitigen Kontakt, (ii) Induktion einer zweiten Spannung zwischen dem zweiten primärseitigen Kontakt und dem dritten primärseitigen Kontakt, wobei die erste Spannung eine gleiche Richtung im Vergleich zur Richtung der zweiten Spannung aufweist.

Gemäß einem vorteilhaften Ausführungsbeispiel wird vorgeschlagen, dass die zwischen dem zweiten sekundärseitigen Kontakt und dem ersten sekundärseitigen Kontakt angelegte positive Spannung folgendes bewirkt: (i) Induktion der ersten Spannung als positive Spannung zwischen dem dritten primärseitigen Kontakt und dem ersten primärseitigen Kontakt und Induktion der zweiten Spannung als positive Spannung zwischen dem zweiten primärseitigen Kontakt und dem dritten primärseitigen Kontakt; und (ii) Induktion der ersten Spannung als negative Spannung zwischen dem dritten primärseitigen Kontakt und dem ersten primärseitigen Kontakt und Induktion der zweiten Spannung als negative Spannung zwischen dem zweiten primärseitigen Kontakt und dem dritten primärseitigen Kontakt.

Gemäß einem vorteilhaften Ausführungsbeispiel wird vorgeschlagen, dass das Wicklungsverhältnis zwischen der ersten sekundärseitigen Wicklung des ersten Transformatorelements und der primärseitigen Wicklung des ersten Transformatorelements und dass das Wicklungsverhältnis zwischen der zweiten sekundärseitigen Wicklung des zweiten Transformatorelements und der primärseitigen Wicklung des zweiten Transformatorelements jeweils eines der folgenden Verhältnisse aufweist: (i) näherungsweise 1:1; und (ii) näherungsweise zwischen 1:1 und 2:1.

Der Begriff näherungsweise kann beispielsweise hier und im folgenden derart verstanden werden, dass eine Abweichung von weniger als 35% vom Nennwert, oder weniger als 10% vom Nennwert, oder weniger als 5% vom Nennwert, oder weniger als 1% vom Nennwert, als näherungsweise dem Nennwert entsprechend verstanden werden kann. Bei einer beispielhaften Abweichung von weniger als 10% würden bei einem näherungsweisen Wicklungsverhältnis von 1:1 Wicklungsverhältnisse zwischen 0,9:1,1 und 1,1:0,9 unter das näherungsweise Wicklungsverhältnis von 1:1 fallen.

Gemäß einem vorteilhaften Ausführungsbeispiel wird vorgeschlagen, dass das Wicklungsverhältnis zwischen der zweiten sekundärseitigen Wicklung des ersten Transformatorelements und der primärseitigen Wicklung des ersten Transformatorelements und dass das Wicklungsverhältnis zwischen der ersten sekundärseitigen Wicklung des zweiten Transformatorelements und der primärseitigen Wicklung des zweiten Transformatorelements jeweils eines der folgenden Verhältnisse aufweist: (i) näherungsweise 1:1; und (ii) näherungsweise zwischen 2:1 und 4:1. Gemäß einem vorteilhaften Ausführungsbeispiel wird vorgeschlagen, dass der erste primärseitige Kontakt dazu eingerichtet ist, mit einem Leiter aus Phasenleiter und Neutralleiter verbunden zu werden, und der zweite primärseitige Kontakt dazu eingerichtet ist, mit dem anderen Leiter aus Phasenleiter und Neutralleiter verbunden zu werden, und wobei der dritte primärseitige Kontakt dazu eingerichtet ist, mit dem Schutzleiter verbunden zu werden.

Gemäß einem vorteilhaften Ausführungsbeispiel wird vorgeschlagen, dass der Netzanschluss einen zu CEE ("Commission on the Rules for the Approval of the Electrical Equipment") 7/4 kompatiblen Schutzkontaktstecker umfasst.

Die Erfindung wird im Folgenden anhand von Ausführungsbeispiele zeigenden Zeichnungen näher erläutert.

In den Figuren zeigen:
- Fig. 1: eine exemplarische Vorrichtung gemäß einem ersten Ausführungsbeispiel;
- Fig. 2a: eine exemplarische Vorrichtung gemäß einem zweiten Ausführungsbeispiel;
- Fig. 2b: eine exemplarische Vorrichtung gemäß einem dritten Ausführungsbeispiel;
- Fig. 3a: eine exemplarische Vorrichtung gemäß einem vierten Ausführungsbeispiel;
- Fig. 3b: eine exemplarische Vorrichtung gemäß einem fünften Ausführungsbeispiel;
- Fig. 4: eine exemplarische Vorrichtung gemäß einem sechsten Ausführungsbeispiel;
- Fig. 5: eine exemplarische Anordnung von einem ersten Transformatorelement und einem zweiten Transformatorelement in einem Mehrlochkerntransformator;
- Fig. 6a: eine exemplarische Vorrichtung gemäß einem siebten Ausführungsbeispiel;
- Fig. 6b: eine exemplarische Vorrichtung gemäß einem achten Ausführungsbeispiel;
- Fig. 6c: eine exemplarische Vorrichtung gemäß einem neunten Ausführungsbeispiel; und
- Fig. 6d: eine exemplarische Vorrichtung gemäß einem zehnten Ausführungsbeispiel.

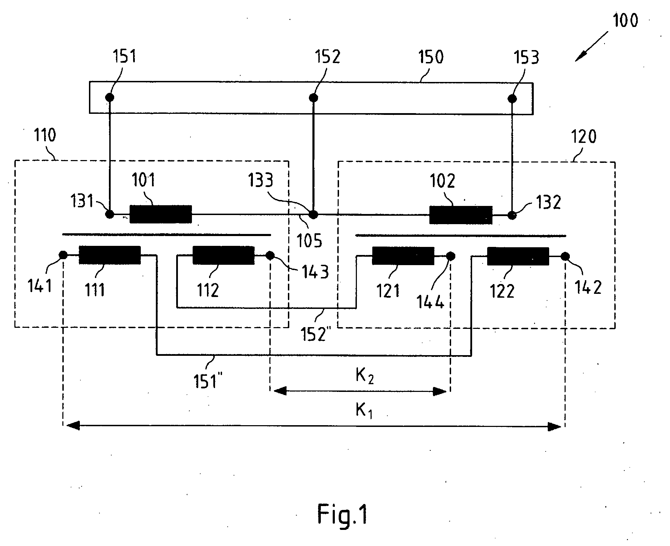

Figur 1a zeigt eine exemplarische Vorrichtung 100 gemäß einem ersten Ausführungsbeispiel.

Die Vorrichtung 100 ist eingerichtet zur Kopplung eines PLC-Modems (nicht in Fig. 1 dargestellt) an ein Stromversorgungsnetz zur Übertragung von Daten über das Stromversorgungsnetz. Beispielsweise kann die Vorrichtung 100 Teil eines solchen PLC-Modems darstellen.

Die Vorrichtung 100 umfasst einen Netzanschluss 150, welcher dazu eingerichtet ist, die Vorrichtung 100 mit einem Phasenleiter, einem Nullleiter und einem Schutzleiter des Stromversorgungsnetzes zu verbinden. Der Netzanschluss 150 umfasst beispielsweise einen ersten Kontakt 151, einen zweiten Kontakt 152 und einen dritten Kontakt 153, wobei jeweils einer dieser drei Kontakte 151, 152, 153 mit jeweils einem unterschiedlichen Leiter aus Phasenleiter, Nullleiter und Schutzleiter des Stromversorgungsnetzes verbunden wird, wenn der Netzanschluss 150 mit dem Stromversorgungsnetz verbunden wird. Beispielsweise kann der Anschluss 150 einen Netzstecker darstellen oder mit einem Netzstecker verbunden sein.

Die Vorrichtung 100 umfasst ein erstes Transformatorelement 110, welches eine primärseitige Wicklung 101, eine erste sekundärseitige Wicklung 111 und eine zweite sekundärseitige Wicklung 112 umfasst. Somit ist die primärseitige Wicklung 101 des ersten Transformatorelements 110 sowohl mit der ersten sekundärseitigen Wicklung 111 als auch mit der zweiten sekundärseitigen Wicklung 112 des ersten Transformatorelements 110 induktiv gekoppelt. Beispielsweise können die primärseitige Wicklung 101, die erste sekundärseitige Wicklung 111 und die zweite primärseitige Wicklung 112 des ersten Transformatorelements 110 derart auf einem gemeinsamen Transformatorkern angeordnet sein, dass durch die primärseitige Wicklung 101, die erste sekundärseitige Wicklung 111 und die zweite primärseitige Wicklung 112 des ersten Transformatorelements 110 im wesentlichen der gleiche erste Magnetfluss fließt.

Die Vorrichtung 100 umfasst ferner ein zweites Transformatorelement 120, welches eine primärseitige Wicklung 102, eine erste sekundärseitige Wicklung 121 und eine zweite sekundärseitige Wicklung 122 umfasst. Somit ist die primärseitige Wicklung 102 des zweiten Transformatorelements 120 sowohl mit der ersten sekundärseitigen Wicklung 121 als auch mit der zweiten sekundärseitigen Wicklung 122 des zweiten Transformatorelements 120 induktiv gekoppelt. Beispielsweise können die primärseitige Wicklung 102, die erste sekundärseitige Wicklung 121 und die zweite primärseitige Wicklung 122 des zweiten Transformatorelements 120 derart auf einem gemeinsamen Transformatorkern angeordnet sein, dass durch die primärseitige Wicklung 102, die erste sekundärseitige Wicklung 121 und die zweite primärseitige Wicklung 122 des zweiten Transformatorelements 120 im wesentlichen der gleiche zweite Magnetfluss fließt. Vorzugsweise ist dieser zweite Magnetfluss im wesentlichen oder vollständig vom ersten Magnetfluss, welcher durch die primärseitige Wicklung 101, die erste sekundärseitige Wicklung 111 und die zweite primärseitige Wicklung 112 des ersten Transformatorelements 110 fließt, entkoppelt.

Beispielsweise können das erste Transformatorelement 110 und das zweite Transformatorelement 120 jeweils getrennt voneinander ausgebildete Transformatoren darstellen. Das erste Transformatorelement 110 und das zweite Transformatorelement 120 können jedoch beispielsweise auch jeweils Teil eine Mehrlochkerntransformators, wie beispielsweise ein Doppellochkerntransformator, sein.

Die primärseitige Wicklung 101 des ersten Transformatorelements 110 ist mit der primärseitigen Wicklung 102 des zweiten Transformatorelements 120 in Reihe 105 verbunden und die erste sekundärseitige Wicklung 121 des zweiten Transformatorelements 120 ist mit der zweiten sekundärseitigen Wicklung 112 des ersten Transformatorelements 110 in Reihe 152" verbunden. Die in Fig. 1 exemplarisch dargestellten Reihenverbindungen 105, 152" sind nur beispielhaft und nicht einschränkend zu verstehen.

Ferner ist die erste sekundärseitige Wicklung 111 des ersten Transformatorelements 110 mit der zweiten sekundärseitigen Wicklung 122 des zweiten Transformatorelements 120 in Reihe 151" verbunden ist. Die in Fig. 1 exemplarisch dargestellte Reihenverbindung 151" ist nur beispielhaft und nicht einschränkend zu verstehen.

Ferner umfasst die Vorrichtung 100 einen ersten primärseitigen Kontakt 131, welcher an dem der primärseitigen Wicklung 102 des zweiten Transformatorelements 120 abgewandten Ende der primärseitigen Wicklung 101 des ersten Transformatorelements 110 angeordnet ist, einen zweiten primärseitigen Kontakt 132, welcher an dem der primärseitigen Wicklung 101 des ersten Transformatorelements 110 abgewandten Ende der primärseitigen Wicklung 102 des zweiten Transformatorelements 120 angeordnet ist, und einen dritten primärseitigen Kontakt 133, welcher zwischen der primärseitigen Wicklung 101 des ersten Transformatorelements 110 und der primärseitigen Wicklung 102 des zweiten Transformatorelements 120 angeordnet ist und somit zwischen der Reihenschaltung 105 der primärseitigen Wicklung 101 des ersten Transformatorelements 110 und der primärseitigen Wicklung 102 des zweiten Transformatorelements 120 angeordnet ist.

Der erste primärseitige Kontakt 131 und der zweite primärseitige Kontakt 132 sind dazu eingerichtet ist, über den Netzanschluss 150 mit jeweils einem verschiedenen Leiter aus einem Phasenleiter und einem Neutralleiter des Stromversorgungsnetzes verbunden zu werden, und der dritte primärseitige Kontakt 133 ist dazu eingerichtet ist, über den Netzanschluss mit einem Schutzleiter des Stromversorgungsnetzes verbunden zu werden, wie beispielsweise durch Einstecken eines Netzsteckers in eine Steckdose des Stromversorgungsnetzes.

Ferner umfasst die Vorrichtung einen ersten sekundärseitigen Kontakt 141, welcher an dem der zweiten sekundärseitigen Wicklung 122 des zweiten Transformatorelements 120 abgewandten Ende der ersten sekundärseitigen Wicklung 111 des ersten Transformatorelements 110 angeordnet ist (bezogen auf die elektrische Reihenverbindung 151" der ersten sekundärseitigen Wicklung 111 des ersten Transformatorelements 110 und der zweiten sekundärseitigen Wicklung 122 des zweiten Transformatorelements), einen zweiten sekundärseitigen Kontakt 142, welcher an dem der ersten sekundärseitigen Wicklung 111 des ersten Transformatorelements 110 abgewandten Ende der zweiten sekundärseitigen Wicklung 122 des zweiten Transformatorelements 120 angeordnet ist (bezogen auf die elektrische Reihenverbindung 151" der ersten sekundärseitigen Wicklung 111 des ersten Transformatorelements 110 und der zweiten sekundärseitigen Wicklung 122 des zweiten Transformatorelements), einen dritten sekundärseitigen Kontakt 143, welcher an dem der ersten sekundärseitigen Wicklung 121 des zweiten Transformatorelements 120 abgewandten Ende der zweiten sekundärseitigen Wicklung 112 des ersten Transformatorelements 110 angeordnet ist (bezogen auf die elektrische Reihenverbindung 152" der zweiten sekundärseitigen Wicklung 112 des ersten Transformatorelements 110 und der ersten sekundärseitigen Wicklung 121 des zweiten Transformatorelements), und einen vierten sekundärseitigen Kontakt 144, welcher an dem der zweiten sekundärseitigen Wicklung 112 des ersten Transformatorelements 110 abgewandten Ende der ersten sekundärseitigen Wicklung 121 des zweiten Transformatorelements 120 angeordnet ist (bezogen auf die elektrische Reihenverbindung 152" der zweiten sekundärseitigen Wicklung 112 des ersten Transformatorelements 110 und der ersten sekundärseitigen Wicklung 121 des zweiten Transformatorelements).

Die Vorrichtung 100 ist dazu eingerichtet ist, einen ersten sekundärseitigen Übertragungskanal K1, welcher zwischen dem ersten und dem zweiten sekundärseitigen Kontakt 141, 142 ausgebildet ist, über das erste und das zweite Transformatorelement 110, 120 mit dem Stromversorgungsnetz zumindest hochfrequenzmäßig zu koppeln; und die Vorrichtung 100 ist dazu eingerichtet ist, einen zweiten sekundärseitigen Übertragungskanal K2, welcher zwischen dem dritten und dem vierten sekundärseitigen Kontakt 143, 144 ausgebildet ist, über das erste und das zweite Transformatorelement 110,120 mit dem Stromversorgungsnetz zumindest hochfrequenzmäßig zu koppeln. Als Hochfrequenz in Zusammenhang mit einer PLC-Übertragung können beispielsweise Frequenzen von mehr als 1kHz, oder mehr als 9kHz, oder mehr als 100kHz, oder mehr als 1MHz betrachtet werden.

Beispielsweise kann ein PLC-Modem zur Ein- oder Auskopplung von PLC-Signalen mit dem ersten und zweiten sekundärseitigen Kontakt 141,142 der Vorrichtung 100 zur Kopplung des Modems über einen ersten Übertragungskanal K1 über das Stromversorgungsnetz verbunden werden, und das PLC-Modem kann zur Ein- oder Auskopplung von PLC-Signalen mit dem dritten und vierten sekundärseitigen Kontakt 143, 144 zur Kopplung des Modems über einen zweiten Übertragungskanal K2 über das Stromversorgungsnetz verbunden werden. Somit kann über die beiden Übertragungskanäle K1 und K2 beispielsweise eine MIMO (Multi-Input-Multiple-Output) Kopplung des PLC-Modems an das Stromversorgungsnetz erfolgen, wobei ein Diversity-Gewinn durch die Verwendung der zwei Übertragungskanäle K1 und K2 erreicht werden kann.

Beispielsweise sind daher zwischen dem ersten primärseitigen Kontakt 131 und dem ersten Kontakt 151 des Netzanschlusses 150, zwischen dem zweiten primärseitigen Kontakt 132 und dem dritten Kontakt 153 des Netzanschlusses 150, und zwischen dem dritten primärseitigen Kontakt 133 und dem zweiten Kontakt 152 des Netzanschlusses 150 keine als Tiefpass wirkenden Bauelemente, wie beispielsweise eine Spule, angeordnet. Zwischen dem ersten primärseitigen Kontakt 131 und dem ersten Kontakt 151 des Netzanschlusses 150, und/oder zwischen dem zweiten primärseitigen Kontakt 132 und dem dritten Kontakt 153 des Netzanschlusses 150, und/oder zwischen dem dritten primärseitigen Kontakt 133 und dem zweiten Kontakt 152 des Netzanschlusses 150 kann jedoch vorzugsweise beispielsweise jeweils ein Kondensator, welcher beispielsweise eine Kapazität von 4,7nF oder eine hiervon abweichende Kapazität aufweisen kann, angeordnet sein (nicht in Fig. 1a dargestellt). Diese Kondensatoren können beispielsweise dazu eingerichtet sein, eine 50Hz Netzspannung (oder eine andere Netzfrequenz beispielsweise 60Hz oder dergleichen) herausfiltern.

Das Wicklungsverhältnis zwischen der primärseitigen Wicklung 101 des ersten Transformatorelements 110 und der primärseitigen Wicklung 102 des zweiten Transformatorelements 120, das Wicklungsverhältnis zwischen der ersten sekundärseitigen Wicklung 111 des ersten Transformatorelements 110 und der zweiten sekundärseitigen Wicklung 122 des zweiten Transformatorelements 120, und dass das Wicklungsverhältnis zwischen der zweiten sekundärseitigen Wicklung 112 des ersten Transformatorelements 110 und der ersten sekundärseitigen Wicklung 121 des zweiten Transformatorelements 120 jeweils ein Wicklungsverhältnis von näherungsweise 1:1 aufweisen. Durch diese Wicklungsverhältnisse kann näherungsweise oder vollständige Symmetrie bezüglich der Ein- und/oder Auskopplung erreicht werden.

Der Begriff näherungsweise kann beispielsweise derart verstanden werden, dass eine Abweichung von weniger als 35% vom Nennwert, oder weniger als 10% vom Nennwert, oder weniger als 5% vom Nennwert, oder weniger als 1% vom Nennwert, als näherungsweise dem Nennwert entsprechend verstanden werden kann. Bei einer beispielhaften Abweichung von weniger als 10% würden bei einem näherungsweisen Wicklungsverhältnis von 1:1 Wicklungsverhältnisse zwischen 0,9:1,1 und 1,1:0,9 unter das näherungsweise Wicklungsverhältnis von 1:1 fallen.

Das Wicklungsverhältnis zwischen der ersten sekundärseitigen Wicklung 111 des ersten Transformatorelements 110 und der primärseitigen Wicklung 101 des ersten Transformatorelements 110 und das Wicklungsverhältnis zwischen der zweiten sekundärseitigen Wicklung 122 des zweiten Transformatorelements 120 und der primärseitigen Wicklung 102 des zweiten Transformatorelements 120 weist beispielsweise jeweils eines der folgenden Verhältnisse auf: (i) näherungsweise 1:1; und (ii) näherungsweise zwischen 1:1 und 2:1.

Das Wicklungsverhältnis zwischen der zweiten sekundärseitigen Wicklung 112 des ersten Transformatorelements 110 und der primärseitigen Wicklung 101 des ersten Transformatorelements 110 und das Wicklungsverhältnis zwischen der ersten sekundärseitigen Wicklung 121 des zweiten Transformatorelements 120 und der primärseitigen Wicklung 102 des zweiten Transformatörelements 120 weist beispielsweise jeweils eines der folgenden Verhältnisse auf: (i) näherungsweise 1:1; und (ii) näherungsweise zwischen 2:1 und 4:1.

Beispielsweise kann das Wicklungsverhältnis zwischen der ersten sekundärseitigen Wicklung 111 des ersten Transformatorelements 110 und der primärseitigen Wicklung 101 des ersten Transformatorelements 110 und das Wicklungsverhältnis zwischen der zweiten sekundärseitigen Wicklung 122 des zweiten Transformatorelements 120 und der primärseitigen Wicklung 102 des zweiten Transformatorelements 120 jeweils näherungsweise 1:2 betragen und gleichzeitig kann das Wicklungsverhältnis zwischen der zweiten sekundärseitigen Wicklung 112 des ersten Transformatorelements 110 und der primärseitigen Wicklung 101 des ersten Transformatorelements 110 und das Wicklungsverhältnis zwischen der ersten sekundärseitigen Wicklung 121 des zweiten Transformatorelements 120 und der primärseitigen Wicklung 102 des zweiten Transformatorelements 120 beispielsweise jeweils ebenfalls näherungsweise 1:2 betragen. Somit kann beispielsweise eine MIMO-Einkopplung ohne Erhöhung des Sendepegels über das Stromversorgungsnetz erzielt werden.

Die Vorrichtung 100 ist beispielsweise derart eingerichtet, dass die Reihenschaltung 151" aus der ersten sekundärseitigen Wicklung 111 des ersten Transformatorelements 110 und der zweiten sekundärseitigen Wicklung 121 des zweiten Transformatorelements 120, der Wicklungssinn zwischen der ersten sekundärseitigen Wicklung 111 des ersten Transformatorelements 110 und der primärseitigen Wicklung 101 des ersten Transformatorelements 110, und der Wicklungssinn zwischen der zweiten sekundärseitigen Wicklung 121 des zweiten Transformatorelements 120 und der primärseitigen Wicklung 102 des zweiten Transformatorelements 120 derart ausgestaltet sind, dass eine zwischen dem zweiten sekundärseitigen Kontakt 142 und dem ersten sekundärseitigen Kontakt 141 angelegte positive Spannung U₁ folgendes bewirkt: (i) Induktion einer ersten Spannung U_{1,1} zwischen dem dritten primärseitigen Kontakt 133 und dem ersten primärseitigen Kontakt 131, (ii) Induktion einer zweiten Spannung U_{1,2} zwischen dem zweiten primärseitigen Kontakt 132 und dem dritten primärseitigen Kontakt 133, wobei die erste Spannung U_{1,1} eine gleiche Richtung im Vergleich zur Richtung der zweiten Spannung U_{1,2} aufweist.

Gemäß dieser beispielhaften Kopplungsvariante für den ersten Kanal K1 ist die Vorrichtung 100 derart eingerichtet, dass eine solche positive Spannung U₁, welche zwischen dem zweiten sekundärseitigen Kontakt 142 und dem ersten sekundärseitigen Kontakt 141 anliegt (d.h. das Spannungspotential des zweiten sekundärseitigen Kontakts 142 liegt höher als das Spannungspotential des ersten sekundärseitigen Kontakts 141), eine Induktion einer ersten Spannung U_{1,1} zwischen dem dritten primärseitigen Kontakt 133 und dem ersten primärseitigen Kontakt 131 durch induktive Kopplung zwischen der ersten sekundärseitigen Wicklung 111 und der primärseitigen Wicklung 101 des ersten Transformatorelements 110 und einer Induktion einer zweiten Spannung U_{1,2} zwischen dem zweiten primärseitigen Kontakt 132 und dem dritten primärseitigen Kontakt 133 durch induktive Kopplung zwischen der zweiten sekundärseitigen Wicklung 122 und der primärseitigen Wicklung 102 des zweiten Transformatorelement 120 bewirkt (wobei der Einfluss einer gegebenenfalls am zweiten Kanal K2 angelegten Spannung U₂ nicht berücksichtigt wird, d.h. es kann beispielsweise U₂=0V angenommen werden), wobei die erste Spannung U_{1,1} eine gleiche Richtung im Vergleich zur Richtung der zweiten Spannung U_{1,2} aufweist. Somit kann die Vorrichtung 100 beispielsweise derart eingerichtet sein, dass beispielsweise die durch U₁ induzierte erste Spannung U_{1,1} eine positive Spannung zwischen dem dritten primärseitigen Kontakt 133 und dem ersten primärseitigen Kontakt 131 darstellt (d.h. das Spannungspotential des dritten primärseitigen Kontakts 133 liegt höher als das Spannungspotential des ersten sekundärseitigen Kontakts 131) und die durch U₁ induzierte zweite Spannung U_{1,2} kann eine positive Spannung zwischen dem zweiten primärseitigen Kontakt 132 und dem dritten primärseitigen Kontakt 133 darstellen (d.h. das Spannungspotential des zweiten primärseitigen Kontakts 132 liegt höher als das Spannungspotential des dritten sekundärseitigen Kontakts 133). Oder die Vorrichtung 100 kann beispielsweise derart eingerichtet sein, dass beispielsweise die durch U₁ induzierte erste Spannung U_{1,1} eine negative Spannung zwischen dem dritten primärseitigen Kontakt 133 und dem ersten primärseitigen Kontakt 131 darstellt (d.h. das Spannungspotential des dritten primärseitigen Kontakts 133 liegt niedriger als das Spannungspotential des ersten sekundärseitigen Kontakts 131) und die durch U₁ induzierte zweite Spannung U_{1,2} kann eine negative Spannung zwischen dem zweiten primärseitigen Kontakt 132 und dem dritten primärseitigen Kontakt 133 darstellen (d.h. das Spannungspotential des zweiten primärseitigen Kontakts 132 liegt niedriger als das Spannungspotential des dritten sekundärseitigen Kontakts 133).

Die Vorrichtung 100 ist beispielsweise ferner derart eingerichtet, dass die Reihenschaltung 152 aus der ersten sekundärseitigen Wicklung 121 des zweiten Transformatorelements 120 und der zweiten sekundärseitigen Wicklung 112 des ersten Transformatorelements 110, der Wicklungssinn zwischen der ersten sekundärseitigen Wicklung 121 des zweiten Transformatorelements 120 und der primärseitigen Wicklung 102 des zweiten Transformatorelements 120, und der Wicklungssinn zwischen der zweiten sekundärseitigen Wicklung 112 des ersten Transformatorelements 110 und der primärseitigen Wicklung 101 des ersten Transformatorelements 110 derart ausgestaltet sind, dass eine zwischen dem vierten sekundärseitigen Kontakt 144 und dem dritten sekundärseitigen Kontakt 143 angelegte positive Spannung U₂ folgendes bewirkt: (i) Induktion einer ersten Spannung U_{2,1} zwischen dem dritten primärseitigen Kontakt 133 und dem ersten primärseitigen Kontakt 131, (ii) Induktion einer zweiten Spannung U_{2,2} zwischen dem zweiten primärseitigen Kontakt 132 und dem dritten primärseitigen Kontakt 133, (iii) wobei die erste Spannung U_{2,1} eine umgekehrte Richtung im Vergleich zur Richtung der zweiten Spannung U_{2,2} aufweist.

Gemäß dieser beispielhaften Kopplungsvariante für den zweiten Kanal K2 ist die Vorrichtung 100 derart eingerichtet, dass eine solche positive Spannung U₂, welche zwischen dem vierten sekundärseitigen Kontakt 144 und dem dritten sekundärseitigen Kontakt 143 anliegt (d.h. das Spannungspotential des vierten sekundärseitigen Kontakts 144 liegt höher als das Spannungspotential des dritten sekundärseitigen Kontakts 143), eine Induktion einer ersten Spannung U_{2,1} zwischen dem dritten primärseitigen Kontakt 133 und dem ersten primärseitigen Kontakt 131 durch induktive Kopplung zwischen der zweiten sekundärseitigen Wicklung 112 und der primärseitigen Wicklung 101 des ersten Transformatorelements 110 und einer Induktion einer zweiten Spannung U_{2,2} zwischen dem zweiten primärseitigen Kontakt 132 und dem dritten primärseitigen Kontakt 133 durch induktive Kopplung zwischen der ersten sekundärseitigen Wicklung 121 und der primärseitigen Wicklung 102 des zweiten Transformatorelement 120 bewirkt (wobei der Einfluss einer gegebenenfalls am ersten Kanal K1 angelegten Spannung U₁ nicht berücksichtigt wird, d.h. es kann beispielsweise U₁=0V angenommen werden), wobei die erste Spannung U_{2,1} eine umgekehrte Richtung im Vergleich zur Richtung der zweiten Spannung U_{2,2} aufweist. Somit kann die Vorrichtung 100 beispielsweise derart eingerichtet sein, dass beispielsweise die durch U₂ induzierte erste Spannung U_{2,1} eine negative Spannung zwischen dem dritten primärseitigen Kontakt 133 und dem ersten primärseitigen Kontakt 131 darstellt (d.h. das Spannungspotential des dritten primärseitigen Kontakts 133 liegt niedriger als das Spannungspotential des ersten sekundärseitigen Kontakts 131) und die durch U₂ induzierte zweite Spannung U_{2,2} kann eine positive Spannung zwischen dem zweiten primärseitigen Kontakt 132 und dem dritten primärseitigen Kontakt 133 darstellen (d.h. das Spannungspotential des zweiten primärseitigen Kontakts 132 liegt höher als das Spannungspotential des dritten sekundärseitigen Kontakts 133). Oder die Vorrichtung 100 kann beispielsweise derart eingerichtet sein, dass beispielsweise die durch U₂ induzierte erste Spannung U_{2,1} eine positive Spannung zwischen dem dritten primärseitigen Kontakt 133 und dem ersten primärseitigen Kontakt 131 darstellt (d.h. das Spannungspotential des dritten primärseitigen Kontakts 133 liegt höher als das Spannungspotential des ersten sekundärseitigen Kontakts 131) und die durch U₂ induzierte zweite Spannung U_{2,2} kann eine negative Spannung zwischen dem zweiten primärseitigen Kontakt 132 und dem dritten primärseitigen Kontakt 133 darstellen (d.h. das Spannungspotential des zweiten primärseitigen Kontakts 132 liegt niedriger als das Spannungspotential des dritten sekundärseitigen Kontakts 133).

In den folgenden Ausführungsbeispielen werden exemplarisch verschiedene Beispiele für diese beispielhaften Kopplungsvarianten für den ersten Kanal K1 bzw. zweiten Kanal K2 aufgeführt, basierend auf der in Fig. 1a dargestellten Vorrichtung 100 gemäß einem ersten Ausführungsbeispiel. Die Ausführungen zu Merkmalen der Vorrichtung 100 gemäß dem ersten Ausführungsbeispiel können daher gleichermaßen auf die nachfolgenden Vorrichtungen gemäß den weiteren Ausführungsbeispielen übertragen werden.

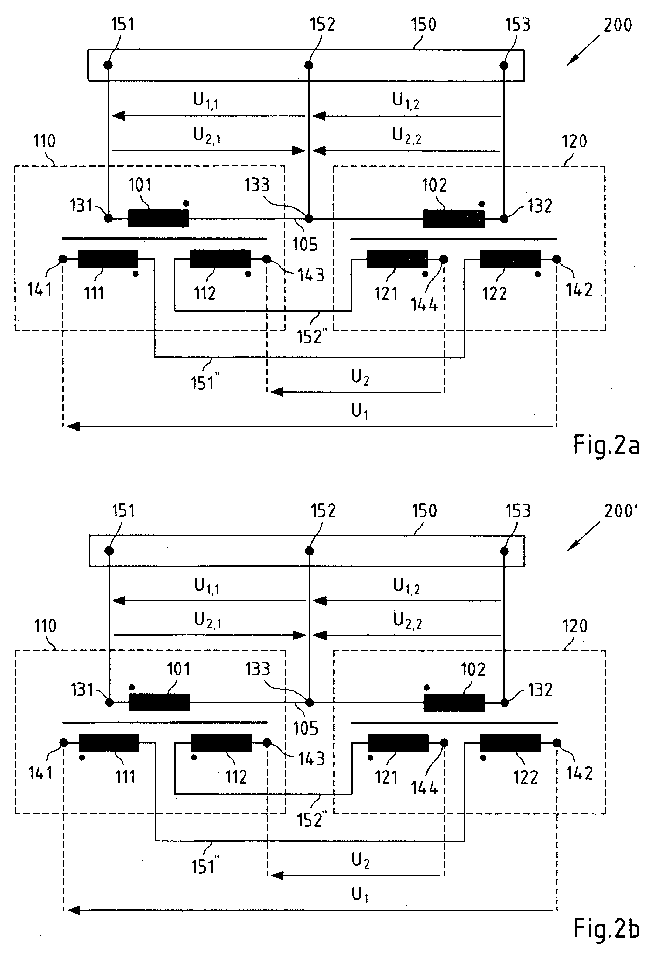

Fig. 2a zeigt eine exemplarische Vorrichtung 200 gemäß einem zweiten Ausführungsbeispiel. Die Vorrichtung 200 basiert auf der in der Fig. 1 dargestellten Vorrichtung 100 gemäß dem ersten Ausführungsbeispiel.

Die Vorrichtung 100 ist derart eingerichtet, dass die Reihenschaltung 151" aus der ersten sekundärseitigen Wicklung 111 des ersten Transformatorelements 110 und der zweiten sekundärseitigen Wicklung 121 des zweiten Transformatorelements 120, der Wicklungssinn zwischen der ersten sekundärseitigen Wicklung 111 des ersten Transformatorelements 110 und der primärseitigen Wicklung 101 des ersten Transformatorelements 110, und der Wicklungssinn zwischen der zweiten sekundärseitigen Wicklung 121 des zweiten Transformatorelements 120 und der primärseitigen Wicklung 102 des zweiten Transformatorelements 120 derart ausgestaltet sind, dass eine zwischen dem zweiten sekundärseitigen Kontakt 142 und dem ersten sekundärseitigen Kontakt 141 angelegte positive Spannung U₁ die zuvor beschriebene Kopplungsvariante für Kanal K1 bewirkt. Wie in Fig. 2a exemplarisch dargestellt ist, kann diese Kopplungsvariante beispielsweise dadurch erreicht werden, dass die erste sekundärseitige Wicklung 111 des ersten Transformatorelements 110 und die primärseitige Wicklung 101 des ersten Transformatorelements 110 den gleichen Wicklungssinn aufweisen, und die zweite sekundärseitige Wicklung 122 des zweiten Transformatorelements 120 und die primärseitige Wicklung 102 des zweiten Transformatorelements 120 den gleichen Wicklungssinn aufweisen, und die in Fig. 2a dargestellte Reihenschaltung 151" der ersten sekundärseitigen Wicklung 111 des ersten Transformatorelements 110 und der zweiten sekundärseitigen Wicklung 122 des zweiten Transformatorelements 120 verwendet wird. Somit ist die Vorrichtung 200 derart eingerichtet, dass bei angenommener positiver Spannung U₁ die durch U₁ induzierte erste Spannung U_{1,1} eine positive Spannung zwischen dem dritten primärseitigen Kontakt 133 und dem ersten primärseitigen Kontakt 131 darstellt (d.h. das Spannungspotential des dritten primärseitigen Kontakts 133 liegt höher als das Spannungspotential des ersten sekundärseitigen Kontakts 131), und die durch U₁ induzierte zweite Spannung U_{1,2} eine positive Spannung zwischen dem zweiten primärseitigen Kontakt 132 und dem dritten primärseitigen Kontakt 133 darstellt (d.h. das Spannungspotential des zweiten primärseitigen Kontakts 132 liegt höher als das Spannungspotential des dritten sekundärseitigen Kontakts 133).

Die Vorrichtung 200 ist derart eingerichtet, dass die Reihenschaltung 152 aus der ersten sekundärseitigen Wicklung 121 des zweiten Transformatorelements 120 und der zweiten sekundärseitigen Wicklung 112 des ersten Transformatorelements 110, der Wicklungssinn zwischen der ersten sekundärseitigen Wicklung 121 des zweiten Transformatorelements 120 und der primärseitigen Wicklung 102 des zweiten Transformatorelements 120, und der Wicklungssinn zwischen der zweiten sekundärseitigen Wicklung 112 des ersten Transformatorelements 110 und der primärseitigen Wicklung 101 des ersten Transformatorelements 110 derart ausgestaltet sind, dass eine zwischen dem vierten sekundärseitigen Kontakt 144 und dem dritten sekundärseitigen Kontakt 143 angelegte positive Spannung U₂ die zuvor beschriebene Kopplungsvariante für Kanal K2 bewirkt. Wie in Fig. 2a exemplarisch dargestellt ist, kann diese Kopplungsvariante beispielsweise dadurch erreicht werden, dass die erste sekundärseitige Wicklung 121 des zweiten Transformatorelements 120 und die primärseitige Wicklung 102 des zweiten Transformatorelements 110 den gleichen Wicklungssinn aufweisen, und die zweite sekundärseitige Wicklung 112 des ersten Transformatorelements 110 und die primärseitige Wicklung 101 des ersten Transformatorelements 110 den gleichen Wicklungssinn aufweisen, und die in Fig. 2a dargestellte Reihenschaltung 152 der zweiten sekundärseitigen Wicklung 112 des ersten Transformatorelements 110 und der ersten sekundärseitigen Wicklung 121 des zweiten Transformatorelements 120 verwendet wird. Somit ist die Vorrichtung 200 derart eingerichtet, dass bei angenommener positiver Spannung U₂ die durch U₂ induzierte erste Spannung U_{2,1} eine negative Spannung zwischen dem dritten primärseitigen Kontakt 133 und dem ersten primärseitigen Kontakt 131 darstellt (d.h. das Spannungspotential des dritten primärseitigen Kontakts 133 liegt niedriger als das Spannungspotential des ersten sekundärseitigen Kontakts 131) und die durch U₂ induzierte zweite Spannung U_{2,2} eine positive Spannung zwischen dem zweiten primärseitigen Kontakt 132 und dem dritten primärseitigen Kontakt 133 darstellt (d.h. das Spannungspotential des zweiten primärseitigen Kontakts 132 liegt höher als das Spannungspotential des dritten sekundärseitigen Kontakts 133).

Fig. 2b zeigt eine exemplarische Vorrichtung 200' gemäß einem dritten Ausführungsbeispiel. Die Vorrichtung 200' basiert auf der in der Fig. 2a dargestellten Vorrichtung 200' gemäß dem zweiten Ausführungsbeispiel.

Die Vorrichtung 200' unterscheidet sich von der in Fig. 2a dargestellten Vorrichtung 200 lediglich darin, dass sämtliche Wicklungen 101, 102, 111, 112, 121, 122 einen umgekehrten Wicklungssinn aufweisen. Hiermit wird die gleiche Kopplungsvariante für die beiden Kanäle K1 und K2 wie bei der Vorrichtung 200 gemäß dem zweiten Ausführungsbeispiel erzielt. Somit ist die Vorrichtung 200' ist derart eingerichtet, dass bei angenommener positiver Spannung U₁ die durch U₁ induzierte erste Spannung U_{1,1} eine positive Spannung zwischen dem dritten primärseitigen Kontakt 133 und dem ersten primärseitigen Kontakt 131 darstellt (d.h. das Spannungspotential des dritten primärseitigen Kontakts 133 liegt höher als das Spannungspotential des ersten sekundärseitigen Kontakts 131), und die durch U₁ induzierte zweite Spannung U_{1,2} eine positive Spannung zwischen dem zweiten primärseitigen Kontakt 132 und dem dritten primärseitigen Kontakt 133 darstellt (d.h. das Spannungspotential des zweiten primärseitigen Kontakts 132 liegt höher als das Spannungspotential des dritten sekundärseitigen Kontakts 133). Ferner ist die Vorrichtung 200' derart eingerichtet, dass bei angenommener positiver Spannung U₂ die durch U₂ induzierte erste Spannung U_{2,1} eine negative Spannung zwischen dem dritten primärseitigen Kontakt 133 und dem ersten primärseitigen Kontakt 131 darstellt (d.h. das Spannungspotential des dritten primärseitigen Kontakts 133 liegt niedriger als das Spannungspotential des ersten sekundärseitigen Kontakts 131) und die durch U₂ induzierte zweite Spannung U_{2,2} eine positive Spannung zwischen dem zweiten primärseitigen Kontakt 132 und dem dritten primärseitigen Kontakt 133 darstellt (d.h. das Spannungspotential des zweiten primärseitigen Kontakts 132 liegt höher als das Spannungspotential des dritten sekundärseitigen Kontakts 133).

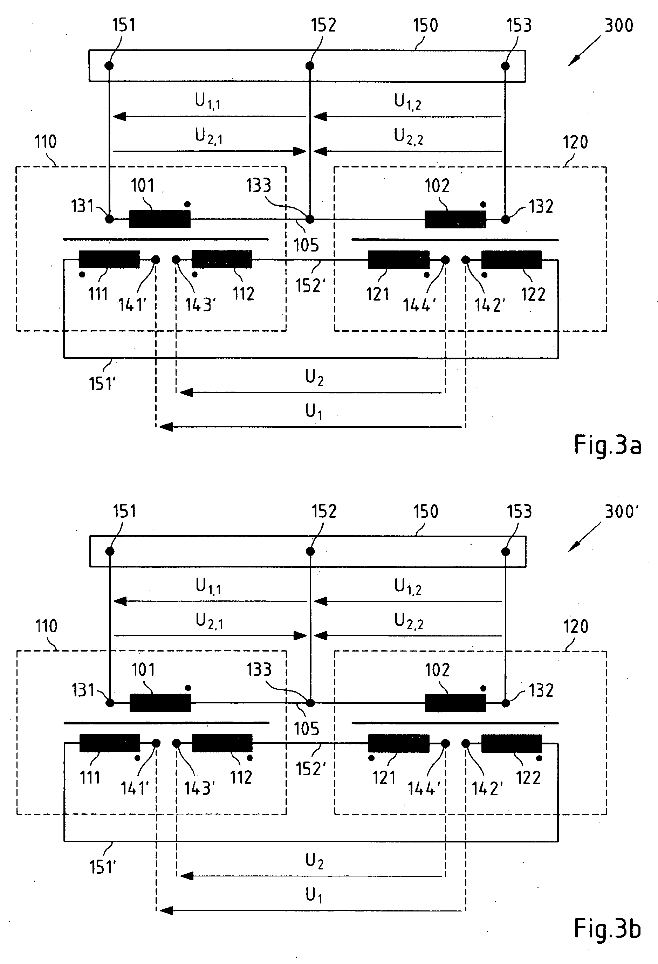

Fig. 3a zeigt eine exemplarische Vorrichtung 300 gemäß einem vierten Ausführungsbeispiel. Die Vorrichtung 300 basiert auf der in der Fig. 1 dargestellten Vorrichtung 100 gemäß dem ersten Ausführungsbeispiel und unterscheidet sich hiervon durch eine andere Reihenschaltung 151' der ersten sekundärseitigen Wicklung 111 des ersten Transformatorelements 110 mit der zweiten sekundärseitigen Wicklung 122 des zweiten Transformatorelements 120 und durch eine andere Reihenschaltung 152' des zweiten sekundärseitigen Wicklung 112 des ersten Transformatorelements 110 mit der ersten sekundärseitigen Wicklung 121 des zweiten Transformatorelements 120.

Die Vorrichtung 300 ist derart eingerichtet, dass die Reihenschaltung 151' aus der ersten sekundärseitigen Wicklung 111 des ersten Transformatorelements 110 und der zweiten sekundärseitigen Wicklung 121 des zweiten Transformatorelements 120, der Wicklungssinn zwischen der ersten sekundärseitigen Wicklung 111 des ersten Transformatorelements 110 und der primärseitigen Wicklung 101 des ersten Transformatorelements 110, und der Wicklungssinn zwischen der zweiten sekundärseitigen Wicklung 121 des zweiten Transformatorelements 120 und der primärseitigen Wicklung 102 des zweiten Transformatorelements 120 derart ausgestaltet sind, dass eine zwischen dem zweiten sekundärseitigen Kontakt 142 und dem ersten sekundärseitigen Kontakt 141 angelegte positive Spannung U₁ die zuvor beschriebene Kopplungsvariante für Kanal K1 bewirkt. Wie in Fig. 3a exemplarisch dargestellt ist, kann diese Kopplungsvariante beispielsweise dadurch erreicht werden, dass die erste sekundärseitige Wicklung 111 des ersten Transformatorelements 110 und die primärseitige Wicklung 101 des ersten Transformatorelements 110 einen entgegengesetzten Wicklungssinn aufweisen, und die zweite sekundärseitige Wicklung 122 des zweiten Transformatorelements 120 und die primärseitige Wicklung 102 des zweiten Transformatorelements 120 einen entgegengesetzten Wicklungssinn aufweisen, und die in Fig. 3a dargestellte Reihenschaltung 151' der ersten sekundärseitigen Wicklung 111 des ersten Transformatorelements 110 und der zweiten sekundärseitigen Wicklung 122 des zweiten Transformatorelements 120 verwendet wird. Somit ist die Vorrichtung 300 derart eingerichtet, dass bei angenommener positiver Spannung U₁ die durch U₁ induzierte erste Spannung U_{1,1} eine positive Spannung zwischen dem dritten primärseitigen Kontakt 133 und dem ersten primärseitigen Kontakt 131 darstellt (d.h. das Spannungspotential des dritten primärseitigen Kontakts 133 liegt höher als das Spannungspotential des ersten sekundärseitigen Kontakts 131), und die durch U₁ induzierte zweite Spannung U_{1,2} eine positive Spannung zwischen dem zweiten primärseitigen Kontakt 132 und dem dritten primärseitigen Kontakt 133 darstellt (d.h. das Spannungspotential des zweiten primärseitigen Kontakts 132 liegt höher als das Spannungspotential des dritten sekundärseitigen Kontakts 133).

Die Vorrichtung 300 ist ferner derart eingerichtet, dass die Reihenschaltung 152' aus der ersten sekundärseitigen Wicklung 121 des zweiten Transformatorelements 120 und der zweiten sekundärseitigen Wicklung 112 des ersten Transformatorelements 110, der Wicklungssinn zwischen der ersten sekundärseitigen Wicklung 121 des zweiten Transformatorelements 120 und der primärseitigen Wicklung 102 des zweiten Transformatorelements 120, und der Wicklungssinn zwischen der zweiten sekundärseitigen Wicklung 112 des ersten Transformatorelements 110 und der primärseitigen Wicklung 101 des ersten Transformatorelements 110 derart ausgestaltet sind, dass eine zwischen dem vierten sekundärseitigen Kontakt 144 und dem dritten sekundärseitigen Kontakt 143 angelegte positive Spannung U₂ die zuvor beschriebene Kopplungsvariante für Kanal K2 bewirkt. Wie in Fig. 3a exemplarisch dargestellt ist, kann diese Kopplungsvariante beispielsweise dadurch erreicht werden, dass die erste sekundärseitige Wicklung 121 des zweiten Transformatorelements 120 und die primärseitige Wicklung 102 des zweiten Transformatorelements 110 den gleichen Wicklungssinn aufweisen, und die zweite sekundärseitige Wicklung 112 des ersten Transformatorelements 110 und die primärseitige Wicklung 101 des ersten Transformatorelements 110 einen entgegengesetzten Wicklungssinn aufweisen, und die in Fig. 3a dargestellte Reihenschaltung 152 der zweiten sekundärseitigen Wicklung 112 des ersten Transformatorelements 110 und der ersten sekundärseitigen Wicklung 121 des zweiten Transformatorelements 120 verwendet wird. Somit ist die Vorrichtung 300 derart eingerichtet, dass bei angenommener positiver Spannung U₂ die durch U₂ induzierte erste Spannung U_{2,1} eine negative Spannung zwischen dem dritten primärseitigen Kontakt 133 und dem ersten primärseitigen Kontakt 131 darstellt (d.h. das Spannungspotential des dritten primärseitigen Kontakts 133 liegt niedriger als das Spannungspotential des ersten sekundärseitigen Kontakts 131) und die durch U₂ induzierte zweite Spannung U_{2,2} eine positive Spannung zwischen dem zweiten primärseitigen Kontakt 132 und dem dritten primärseitigen Kontakt 133 darstellt (d.h. das Spannungspotential des zweiten primärseitigen Kontakts 132 liegt höher als das Spannungspotential des dritten sekundärseitigen Kontakts 133).

Fig. 3b zeigt eine exemplarische Vorrichtung 300' gemäß einem fünften Ausführungsbeispiel. Die Vorrichtung 300' basiert auf der in der Fig. 3a dargestellten Vorrichtung 300 gemäß dem vierten Ausführungsbeispiel und unterscheidet sich hiervon durch abweichende Wicklungssinne einiger Wicklungen.

Die Vorrichtung 300' ist derart eingerichtet, dass die Reihenschaltung 151' aus der ersten sekundärseitigen Wicklung 111 des ersten Transformatorelements 110 und der zweiten sekundärseitigen Wicklung 121 des zweiten Transformatorelements 120, der Wicklungssinn zwischen der ersten sekundärseitigen Wicklung 111 des ersten Transformatorelements 110 und der primärseitigen Wicklung 101 des ersten Transformatorelements 110, und der Wicklungssinn zwischen der zweiten sekundärseitigen Wicklung 121 des zweiten Transformatorelements 120 und der primärseitigen Wicklung 102 des zweiten Transformatorelements 120 derart ausgestaltet sind, dass eine zwischen dem zweiten sekundärseitigen Kontakt 142 und dem ersten sekundärseitigen Kontakt 141 angelegte positive Spannung U₁ die zuvor beschriebene Kopplungsvariante für Kanal K1 bewirkt. Wie in Fig. 3b exemplarisch dargestellt ist, kann diese Kopplungsvariante beispielsweise dadurch erreicht werden, dass die erste sekundärseitige Wicklung 111 des ersten Transformatorelements 110 und die primärseitige Wicklung 101 des ersten Transformatorelements 110 den gleichen Wicklungssinn aufweisen, und die zweite sekundärseitige Wicklung 122 des zweiten Transformatorelements 120 und die primärseitige Wicklung 102 des zweiten Transformatorelements 120 den gleichen Wicklungssinn aufweisen, und die in Fig. 3b dargestellte Reihenschaltung 151' der ersten sekundärseitigen Wicklung 111 des ersten Transformatorelements 110 und der zweiten sekundärseitigen Wicklung 122 des zweiten Transformatorelements 120 verwendet wird. Somit ist die Vorrichtung 300' derart eingerichtet, dass bei angenommener positiver Spannung U₁ die durch U₁ induzierte erste Spannung U_{1,1} eine negative Spannung zwischen dem dritten primärseitigen Kontakt 133 und dem ersten primärseitigen Kontakt 131 darstellt (d.h. das Spannungspotential des dritten primärseitigen Kontakts 133 liegt niedriger als das Spannungspotential des ersten sekundärseitigen Kontakts 131), und die durch U₁ induzierte zweite Spannung U_{1,2} eine negative Spannung zwischen dem zweiten primärseitigen Kontakt 132 und dem dritten primärseitigen Kontakt 133 darstellt (d.h. das Spannungspotential des zweiten primärseitigen Kontakts 132 liegt niedriger als das Spannungspotential des dritten sekundärseitigen Kontakts 133).

Die Vorrichtung 300' ist ferner derart eingerichtet, dass die Reihenschaltung 152' aus der ersten sekundärseitigen Wicklung 121 des zweiten Transformatorelements 120 und der zweiten sekundärseitigen Wicklung 112 des ersten Transformatorelements 110, der Wicklungssinn zwischen der ersten sekundärseitigen Wicklung 121 des zweiten Transformatorelements 120 und der primärseitigen Wicklung 102 des zweiten Transformatorelements 120, und der Wicklungssinn zwischen der zweiten sekundärseitigen Wicklung 112 des ersten Transformatorelements 110 und der primärseitigen Wicklung 101 des ersten Transformatorelements 110 derart ausgestaltet sind, dass eine zwischen dem vierten sekundärseitigen Kontakt 144 und dem dritten sekundärseitigen Kontakt 143 angelegte positive Spannung U₂ die zuvor beschriebene Kopplungsvariante für Kanal K2 bewirkt. Wie in Fig. 3b exemplarisch dargestellt ist, kann diese Kopplungsvariante beispielsweise dadurch erreicht werden, dass die erste sekundärseitige Wicklung 121 des zweiten Transformatorelements 120 und die primärseitige Wicklung 102 des zweiten Transformatorelements 110 einen entgegengesetzten Wicklungssinn aufweisen, und die zweite sekundärseitige Wicklung 112 des ersten Transformatorelements 110 und die primärseitige Wicklung 101 des ersten Transformatorelements 110 den gleichen Wicklungssinn aufweisen, und die in Fig. 3b dargestellte Reihenschaltung 152 der zweiten sekundärseitigen Wicklung 112 des ersten Transformatorelements 110 und der ersten sekundärseitigen Wicklung 121 des zweiten Transformatorelements 120 verwendet wird. Somit ist die Vorrichtung 300 derart eingerichtet, dass bei angenommener positiver Spannung U₂ die durch U₂ induzierte erste Spannung U_{2,1} eine positive Spannung zwischen dem dritten primärseitigen Kontakt 133 und dem ersten primärseitigen Kontakt 131 darstellt (d.h. das Spannungspotential des dritten primärseitigen Kontakts 133 liegt höher als das Spannungspotential des ersten sekundärseitigen Kontakts 131) und die durch U₂ induzierte zweite Spannung U_{2,2} eine negative Spannung zwischen dem zweiten primärseitigen Kontakt 132 und dem dritten primärseitigen Kontakt 133 darstellt (d.h. das Spannungspotential des zweiten primärseitigen Kontakts 132 liegt niedriger als das Spannungspotential des dritten sekundärseitigen Kontakts 133).

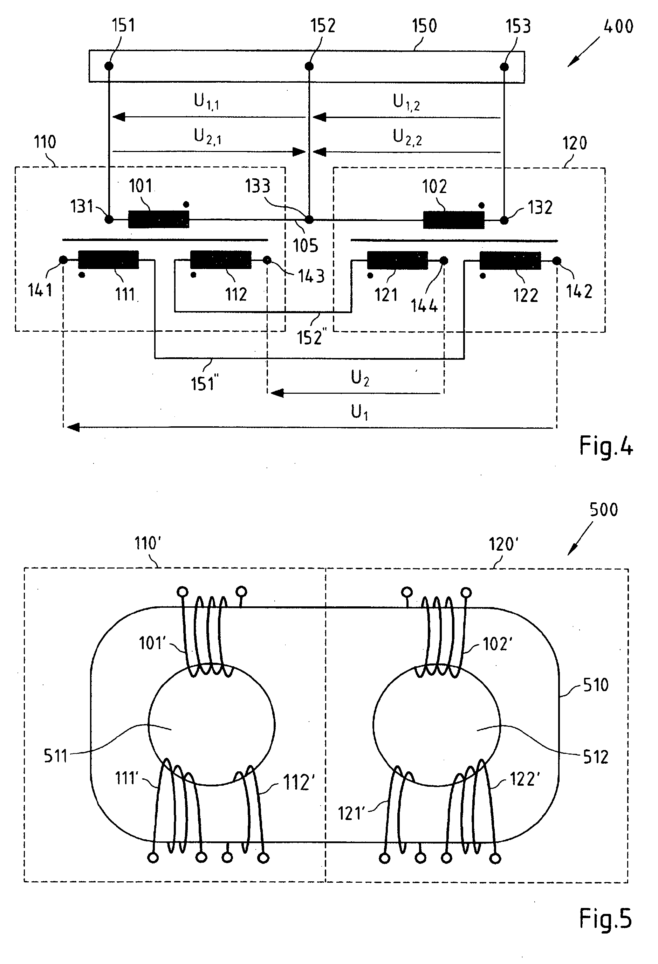

Fig. 4 zeigt eine exemplarische Vorrichtung 400 gemäß einem sechsten Ausführungsbeispiel. Die Vorrichtung 400 basiert auf der in der Fig. 2a dargestellten Vorrichtung 200 gemäß dem zweiten Ausführungsbeispiel und basiert auch auf der in Fig. 2b dargestellten Vorrichtung 200' gemäß einem dritten Ausführungsbeispiel und unterscheidet sich hiervon durch abweichende Wicklungssinne einiger Wicklungen.

Die Vorrichtung 400 ist derart eingerichtet, dass die Reihenschaltung 151" aus der ersten sekundärseitigen Wicklung 111 des ersten Transformatorelements 110 und der zweiten sekundärseitigen Wicklung 121 des zweiten Transformatorelements 120, der Wicklungssinn zwischen der ersten sekundärseitigen Wicklung 111 des ersten Transformatorelements 110 und der primärseitigen Wicklung 101 des ersten Transformatorelements 110, und der Wicklungssinn zwischen der zweiten sekundärseitigen Wicklung 121 des zweiten Transformatorelements 120 und der primärseitigen Wicklung 102 des zweiten Transformatorelements 120 derart ausgestaltet sind, dass eine zwischen dem zweiten sekundärseitigen Kontakt 142 und dem ersten sekundärseitigen Kontakt 141 angelegte positive Spannung U₁ die zuvor beschriebene Kopplungsvariante für Kanal K1 bewirkt. Wie in Fig. 4 exemplarisch dargestellt ist, kann diese Kopplungsvariante beispielsweise dadurch erreicht werden, dass die erste sekundärseitige Wicklung 111 des ersten Transformatorelements 110 und die primärseitige Wicklung 101 des ersten Transformatorelements 110 einen entgegengesetzten Wicklungssinn aufweisen, und die zweite sekundärseitige Wicklung 122 des zweiten Transformatorelements 120 und die primärseitige Wicklung 102 des zweiten Transformatorelements 120 einen entgegengesetzten Wicklungssinn aufweisen, und die in Fig. 4 dargestellte Reihenschaltung 151" der ersten sekundärseitigen Wicklung 111 des ersten Transformatorelements 110 und der zweiten sekundärseitigen Wicklung 122 des zweiten Transformatorelements 120 verwendet wird. Somit ist die Vorrichtung 400 derart eingerichtet, dass bei angenommener positiver Spannung U₁ die durch U₁ induzierte erste Spannung U_{1,1} eine negative Spannung zwischen dem dritten primärseitigen Kontakt 133 und dem ersten primärseitigen Kontakt 131 darstellt (d.h. das Spannungspotential des dritten primärseitigen Kontakts 133 liegt niedriger als das Spannungspotential des ersten sekundärseitigen Kontakts 131), und die durch U₁ induzierte zweite Spannung U_{1,2} eine negative Spannung zwischen dem zweiten primärseitigen Kontakt 132 und dem dritten primärseitigen Kontakt 133 darstellt (d.h. das Spannungspotential des zweiten primärseitigen Kontakts 132 liegt niedriger als das Spannungspotential des dritten sekundärseitigen Kontakts 133).

Die Vorrichtung 400 ist derart eingerichtet, dass die Reihenschaltung 152" aus der ersten sekundärseitigen Wicklung 121 des zweiten Transformatorelements 120 und der zweiten sekundärseitigen Wicklung 112 des ersten Transformatorelements 110, der Wicklungssinn zwischen der ersten sekundärseitigen Wicklung 121 des zweiten Transformatorelements 120 und der primärseitigen Wicklung 102 des zweiten Transformatorelements 120, und der Wicklungssinn zwischen der zweiten sekundärseitigen Wicklung 112 des ersten Transformatorelements 110 und der primärseitigen Wicklung 101 des ersten Transformatorelements 110 derart ausgestaltet sind, dass eine zwischen dem vierten sekundärseitigen Kontakt 144 und dem dritten sekundärseitigen Kontakt 143 angelegte positive Spannung U₂ die zuvor beschriebene Kopplungsvariante für Kanal K2 bewirkt. Wie in Fig. 4 exemplarisch dargestellt ist, kann diese Kopplungsvariante beispielsweise dadurch erreicht werden, dass die erste sekundärseitige Wicklung 121 des zweiten Transformatorelements 120 und die primärseitige Wicklung 102 des zweiten Transformatorelements 110 einen entgegengesetzten Wicklungssinn aufweisen, und die zweite sekundärseitige Wicklung 112 des ersten Transformatorelements 110 und die primärseitige Wicklung 101 des ersten Transformatorelements 110 einen entgegengesetzten Wicklungssinn aufweisen, und die in Fig. 4 dargestellte Reihenschaltung 152" der zweiten sekundärseitigen Wicklung 112 des ersten Transformatorelements 110 und der ersten sekundärseitigen Wicklung 121 des zweiten Transformatorelements 120 verwendet wird. Somit ist die Vorrichtung 200 derart eingerichtet, dass bei angenommener positiver Spannung U₂ die durch U₂ induzierte erste Spannung U_{2,1} eine positive Spannung zwischen dem dritten primärseitigen Kontakt 133 und dem ersten primärseitigen Kontakt 131 darstellt (d.h. das Spannungspotential des dritten primärseitigen Kontakts 133 liegt höher als das Spannungspotential des ersten sekundärseitigen Kontakts 131) und die durch U₂ induzierte zweite Spannung U_{2,2} eine negative Spannung zwischen dem zweiten primärseitigen Kontakt 132 und dem dritten primärseitigen Kontakt 133 darstellt (d.h. das Spannungspotential des zweiten primärseitigen Kontakts 132 liegt niedriger als das Spannungspotential des dritten sekundärseitigen Kontakts 133).

Fig. 5 zeigt eine exemplarische Anordnung 500 von einem ersten Transformatorelement 110' und einem zweiten Transformatorelement 120' in einem Mehrlochkerntransformators 510. In dieser beispielhaften Anordnung 500 stellt der Mehrlochkerntransformator ein Doppellochkerntransformator 510 dar, welcher ein erstes Loch 511 und ein zweites Loch 512 aufweist.

Das erste Transformatorelement 110' und das zweiten Transformatorelement 120' in Fig. 5 kann für jedes erste Transformatorelement 110 und jedes zweite Transformatorelement 120' in den Vorrichtungen 100, 200, 200', 300, 300' und 400 gemäß dem ersten bis sechsten Ausführungsbeispiel verwendet werden, wobei das erste Transformatorelement 110' eine primärseitige Wicklung 101' umfasst, welche jede der zuvor genannten primärseitigen Wicklungen 101 entsprechend kann, so dass der in Fig. 5 dargestellte Mehrlochkerntransformator 500 mitsamt dem ersten Transformatorelement 110' und dem zweiten Transformatorelement 120' in den Vorrichtung 100, 200, 200', 300, 300' und 400 für die dort dargestellten Transformatorelement 110 und 120 verwendet werden können, wobei die erste und zweite sekundärseitige Wicklung 111' und 112' des ersten Transformatorelements 110' der Anordnung 500 jeweils der ersten und zweiten sekundärseitigen Wicklung 111 und 112 des ersten Transformatorelements 110 einer der Vorrichtung 100, 200, 200', 300, 300', 400 und die die erste und zweite sekundärseitige Wicklung 121' und 122' des zweiten Transformatorelements 120' der Anordnung 500 jeweils der ersten und zweiten sekundärseitigen Wicklung 121 und 122 des zweiten ersten Transformatorelements 120 dieser Vorrichtung 100, 200, 200', 300, 300', 400 sein können. Somit kann der Mehrlochkerntransformators 510 für jede der Vorrichtungen 100, 200, 200', 300, 300' und 400 gemäß dem ersten bis sechsten Ausführungsbeispiel verwendet werden.

Die primärseitige Wicklung 101' und die erste und zweite sekundärseitigen Wicklungen 111', 112' des ersten Transformatorelements 110' sind um ein erstes gemeinsames Loch 511 des Mehrlochkerntransformators 510 gewickelt. Somit sind die primärseitige Wicklung 101', die erste sekundärseitige Wicklung 111' und die zweite sekundärseitige Wicklung 112' des ersten Transformatorelements 110' derart auf einem Teil des Mehrlochkerns, welcher das erste Loch 511 umgibt, angeordnet, dass durch die primärseitige Wicklung 101', die erste sekundärseitige Wicklung 111' und die zweite sekundärseitige Wicklung 112' des ersten Transformatorelements 110' im wesentlichen der gleiche erste Magnetfluss fließt.

Die primärseitige Wicklung 102' und die erste und zweite sekundärseitigen Wicklungen 121', 122' des zweiten Transformatorelements 120' sind um ein zweites gemeinsames Loch 512 des Mehrlochkerntransformators 510 gewickelt. Somit sind die primärseitige Wicklung 102', die erste sekundärseitige Wicklung 121' und die zweite sekundärseitige Wicklung 122' des zweiten Transformatorelements 120' derart auf einem Teil des Mehrlochkerns, welcher das zweite Loch 512 umgibt, angeordnet, dass durch die primärseitige Wicklung des zweiten Transformatorelements, die erste sekundärseitige Wicklung und die zweite sekundärseitige Wicklung des zweiten Transformatorelements im wesentlichen der gleiche zweite Magnetfluss fließt.

Durch die Verwendung eines Mehrlochkerntransformators 510 können beispielsweise Kosten gegenüber der Verwendung von zwei einzelnen Transformatoren für das erste bzw. zweite Transformatorelement 110, 120 reduziert werden, wobei gleichzeitig ein geringerer Platzbedarf erzielt werden kann, da nur ein Übertrager verwendet wird. Darüber hinaus kann die Verwendung eines Mehrlochkerntransformators verbesserte Breitbandübertragungseigenschaften gegenüber der Verwendung von Einzellochkerntransformatoren ermöglichen, insbesondere wenn beispielsweise eine gute Kopplung zwischen Wicklungen mit einer relativ geringen Wicklungszahl über einen breiten Frequenzbereich gewünscht ist, wie es im Breitbandfrequenzbereich eines PLC-Signals der Fall ist.

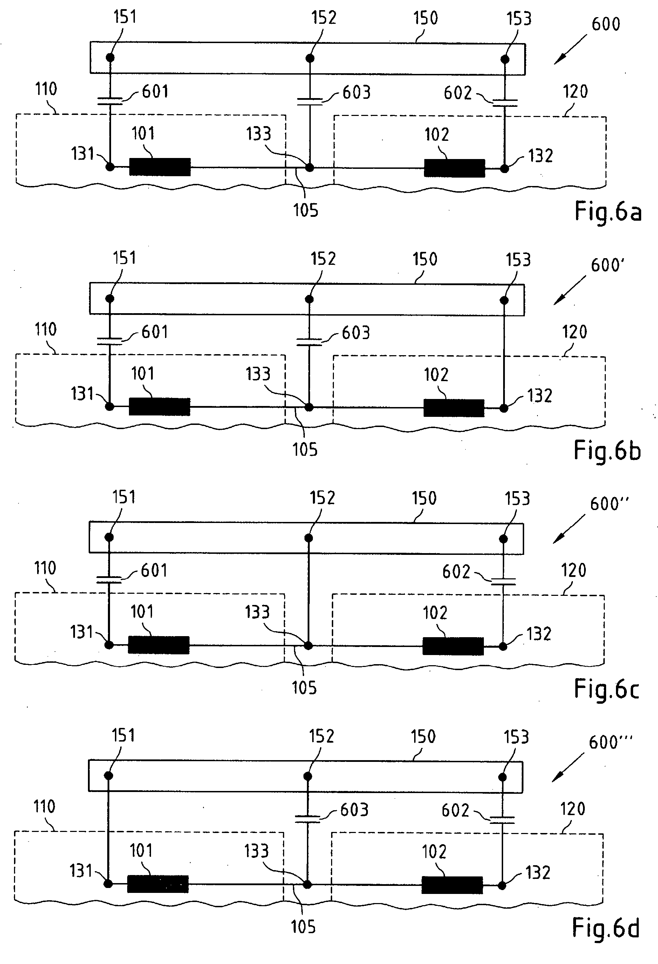

Fig. 6a zeigt eine exemplarische Vorrichtung 600 gemäß einem siebten Ausführungsbeispiel, welche verschiedene primärseitige optionale Hochfrequzenzkopplungen 601,602, 603 darstellt, welche für Verbindung des ersten primärseitigen Kontakts 131 an den ersten Kontakt 151 des Netzanschlusses 150, des zweiten primärseitigen Kontakts 132 an den zweiten Kontakt 152 des Netzanschlusses 150 und des dritten primärseitigen Kontakts 133 an den dritten Kontakt 153 des Netzanschlusses 150 verwendet werden können. Diese Hochfrequenzkopplungen können beispielsweise für jede der in den Fig. 1a bis 4 dargestellten Vorrichtungen 100, 200, 200', 300, 300' und 400 gemäß dem ersten bis sechsten Ausführungsbeispiel verwendet werden, wobei diese Vorrichtungen 100, 200, 200', 300, 300' und 400 beispielsweise auch den in Fig. 5 dargestellten Mehrlochkerntransformator 510 verwenden können.

Zwischen dem ersten primärseitigen Kontakt 131 und dem ersten Kontakt 151 des Netzanschlusses 150 kann beispielsweise ein Kondensator 601 angeordnet sein, und/oder es kann beispielsweise zwischen dem zweiten primärseitigen Kontakt 132 und dem zweiten Kontakt 152 des Netzanschlusses 150 beispielsweise ein Kondensator 602 angeordnet sein, und/oder es kann beispielsweise zwischen dem dritten primärseitigen Kontakt 133 und dem dritten Kontakt 153 des Netzanschlusses 150 beispielsweise ein Kondensator 603 angeordnet sein

Fig. 6b zeigt eine exemplarische Vorrichtung 600' gemäß einem achten Ausführungsbeispiel, welche eine Hochfrequenzkopplungsvariante der Vorrichtung 600 gemäß dem siebten Ausführungsbeispiels darstellt. In der Vorrichtung 600' ist der Kondensator 601 zwischen dem ersten primärseitigen Kontakt 131 und dem ersten Kontakt 151 des Netzanschlusses 150 angeordnet und es ist der Kondensator 603 zwischen dem dritten primärseitigen Kontakt 133 und dem dritten Kontakt 153 des Netzanschlusses 150 angeordnet sein, während beispielsweise kein Kondensator zwischen dem zweiten primärseitigen Kontakt 132 und dem zweiten Kontakt 152 des Netzanschlusses 150 angeordnet ist.

Fig. 6c zeigt eine exemplarische Vorrichtung 600" gemäß einem neunten Ausführungsbeispiel, welche eine Hochfrequenzkopplungsvariante der Vorrichtung 600 gemäß dem siebten Ausführungsbeispiels darstellt. In der Vorrichtung 600" ist der Kondensator 601 zwischen dem ersten primärseitigen Kontakt 131 und dem ersten Kontakt 151 des Netzanschlusses 150 angeordnet und es ist der Kondensator 602 zwischen dem zweiten primärseitigen Kontakt 132 und dem zweiten Kontakt 152 des Netzanschlusses 150 angeordnet sein, während beispielsweise kein Kondensator zwischen dem dritten primärseitigen Kontakt 133 und dem dritten Kontakt 153 des Netzanschlusses 150 angeordnet ist.

Fig. 6d zeigt eine exemplarische Vorrichtung 600"' gemäß einem zehnten Ausführungsbeispiel, welche eine Hochfrequenzkopplungsvariante der Vorrichtung 600 gemäß dem siebten Ausführungsbeispiels darstellt. In der Vorrichtung 600"' ist der Kondensator 603 zwischen dem dritten primärseitigen Kontakt 133 und dem dritten Kontakt 153 des Netzanschlusses 150 angeordnet und es ist der Kondensator 602 zwischen dem zweiten primärseitigen Kontakt 132 und dem zweiten Kontakt 152 des Netzanschlusses 150 angeordnet sein, während beispielsweise kein Kondensator zwischen dem ersten primärseitigen Kontakt 131 und dem ersten Kontakt 151 des Netzanschlusses 150 angeordnet ist.

## Patentansprüche

1. Vorrichtung zur Kopplung eines Modems an ein Stromversorgungsnetz zur Übertragung von Daten über das Stromversorgungsnetz, umfassend:
- einen Netzanschluss (150), welcher dazu eingerichtet ist, die Vorrichtung mit einem Phasenleiter, einen Neutralleiter und einen Schutzleiter des Stromversorgungsnetzes zu verbinden,
- ein erstes Transformatorelement (110), umfassend eine primärseitige Wicklung (101) und eine erste sekundärseitige Wicklung (111),
- ein zweites Transformatorelement (120), umfassend eine primärseitige Wicklung (102) und eine erste sekundärseitige Wicklung (121),
- wobei die primärseitige Wicklung (101) des ersten Transformatorelements (110) mit der primärseitigen Wicklung (102) des zweiten Transformatorelements (120) in Reihe verbunden ist,
- einen ersten primärseitigen Kontakt (131), welcher an dem der primärseitigen Wicklung (102) des zweiten Transformatorelements (120) abgewandten Ende der primärseitigen Wicklung (101) des ersten Transformatorelements (110) angeordnet ist,
- einen zweiten primärseitigen Kontakt (132), welcher an dem der primärseitigen Wicklung (101) des ersten Transformatorelements (110) abgewandten Ende der primärseitigen Wicklung (102) des zweiten Transformatorelements (120) angeordnet ist,
**dadurch gekennzeichnet, dass**
- das erste Transformatorelement (110) eine zweite sekundärseitige Wicklung (112) und das zweite Transformatorelement (120) eine zweite sekundärseitige Wicklung (122) umfasst,
- wobei die erste sekundärseitige Wicklung (121) des zweiten Transformatorelements (120) mit der zweiten sekundärseitigen Wicklung (112) des ersten Transformatorelements (110) in Reihe verbunden ist,
- wobei die erste sekundärseitige Wicklung (111) des ersten Transformatorelements (110) mit der zweiten sekundärseitigen Wicklung (122) des zweiten Transformatorelements (120) in Reihe verbunden ist; und die Vorrichtung ferner umfasst:
- einen dritten primärseitigen Kontakt (133), welcher zwischen der primärseitigen Wicklung (101) des ersten Transformatorelements (110) und der primärseitigen Wicklung (102) des zweiten Transformatorelements (120) angeordnet ist,
- einen ersten sekundärseitigen Kontakt (141), welcher an dem der zweiten sekundärseitigen Wicklung (122) des zweiten Transformatorelements (120) abgewandten Ende der ersten sekundärseitigen Wicklung (111) des ersten Transformatorelements (110) angeordnet ist,
- einen zweiten sekundärseitigen Kontakt (142), welcher an dem der ersten sekundärseitigen Wicklung (111) des ersten Transformatorelements (110) abgewandten Ende der zweiten sekundärseitigen Wicklung (122) des zweiten Transformatorelements (120) angeordnet ist,
- einen dritten sekundärseitigen Kontakt (143), welcher an dem der ersten sekundärseitigen Wicklung (121) des zweiten Transformatorelements (120) abgewandten Ende der zweiten sekundärseitigen Wicklung (112) des ersten Transformatorelements (110) angeordnet ist,
- einen vierten sekundärseitigen Kontakt (144), welcher an dem der zweiten sekundärseitigen Wicklung (112) des ersten Transformatorelements (110) abgewandten Ende der ersten sekundärseitigen Wicklung (121) des zweiten Transformatorelements (120) angeordnet ist,
- wobei der erste primärseitige Kontakt (131), der zweite primärseitige Kontakt (132) und der dritte primärseitige Kontakt (133) jeweils dazu eingerichtet sind, über den Netzanschluss (150) mit jeweils einem verschiedenen Leiter aus einem Phasenleiter, einem Neutralleiter und einem Schutzleiter des Stromversorgungsnetzes verbunden zu werden,
- wobei die Vorrichtung dazu eingerichtet ist, einen ersten sekundärseitigen Übertragungskanal (K1), welcher zwischen dem ersten und dem zweiten sekundärseitigen Kontakt (141, 142) ausgebildet ist, über das erste und das zweite Transformatorelement (110, 120) mit dem Stromversorgungsnetz zumindest hochfrequenzmäßig zu koppeln; und
- wobei die Vorrichtung dazu eingerichtet ist, einen zweiten sekundärseitigen Übertragungskanal (K2), welcher zwischen dem dritten und dem vierten sekundärseitigen Kontakt (143,144) ausgebildet ist, über das erste und das zweite Transformatorelement (110, 120) mit dem Stromversorgungsnetz zumindest hochfrequenzmäßig zu koppeln.

2. Vorrichtung nach Anspruch 1, **dadurch gekennzeichnet, dass** das erste Transformatorelement (110, 110') und das zweite Transformatorelement (120, 120') jeweils Teil eines gemeinsamen Mehrlochkerntransformators (510) sind.

3. Vorrichtung nach Anspruch 2, wobei der Mehrlochkerntransformator (510) ein Doppellochkerntransformator (510) darstellt, welcher ein erstes Loch (511) und ein zweites Loch (512) aufweist, wobei die primärseitige Wicklung (101') und die erste und zweite sekundärseitigen Wicklungen (111', 112') des ersten Transformatorelements (110') um das erste Loch (511) des Doppellochkerntransformators (510) gewickelt sind, und wobei die primärseitige Wicklung (102') und die erste und zweite sekundärseitigen Wicklungen (121', 122') des zweiten Transformatorelements (120') um das zweites Loch (512) des Doppellochkerntransformatörs (510) gewickelt sind.

4. Vorrichtung nach einem der vorangegangenen Ansprüche, **dadurch gekennzeichnet, dass** die Reihenschaltung aus der ersten sekundärseitigen Wicklung (121) des zweiten Transformatorelements (120) und der zweiten sekundärseitigen Wicklung (112) des ersten Transformatorelements (110), der Wicklungssinn zwischen der ersten sekundärseitigen Wicklung (121) des zweiten Transformatorelements (120) und der primärseitigen Wicklung (102) des zweiten Transformatorelements (120), und der Wicklungssinn zwischen der zweiten sekundärseitigen Wicklung (112) des ersten Transformatorelements (110) und der primärseitigen Wicklung (101) des ersten Transformatorelements (110) derart ausgestaltet sind, dass eine zwischen dem vierten sekundärseitigen Kontakt (144) und dem dritten sekundärseitigen Kontakt (143) angelegte positive Spannung folgendes bewirkt:
- Induktion einer ersten Spannung zwischen dem dritten primärseitigen Kontakt (133) und dem ersten primärseitigen Kontakt (131),
- Induktion einer zweiten Spannung zwischen dem zweiten primärseitigen Kontakt (132) und dem dritten primärseitigen Kontakt (133),
- wobei die erste Spannung eine umgekehrte Richtung im Vergleich zur Richtung der zweiten Spannung aufweist.

5. Vorrichtung nach Anspruch 4, **dadurch gekennzeichnet, dass** die zwischen dem vierten sekundärseitigen Kontakt (144) und dem dritten sekundärseitigen Kontakt (143) angelegte positive Spannung folgendes bewirkt:
- Induktion der ersten Spannung als negative Spannung zwischen dem dritten primärseitigen Kontakt (133) und dem ersten primärseitigen Kontakt (131) und Induktion der zweiten Spannung als positive Spannung zwischen dem zweiten primärseitigen Kontakt (132) und dem dritten primärseitigen Kontakt (133); und
- Induktion der ersten Spannung als positive Spannung zwischen dem dritten primärseitigen Kontakt (133) und dem ersten primärseitigen Kontakt (131) und Induktion der zweiten Spannung als negative Spannung zwischen dem zweiten primärseitigen Kontakt (132) und dem dritten primärseitigen Kontakt (133).

6. Vorrichtung nach einem der Ansprüche 1 bis 4, **dadurch gekennzeichnet, dass** die Reihenschaltung aus der ersten sekundärseitigen Wicklung (111) des ersten Transformatorelements (110) und der zweiten sekundärseitigen Wicklung (122) des zweiten Transformatorelements (120), der Wicklungssinn zwischen der ersten sekundärseitigen Wicklung (111) des ersten Transformatorelements (110) und der primärseitigen Wicklung (101) des ersten Transformatorelements (110), und der Wicklungssinn zwischen der zweiten sekundärseitigen Wicklung (122) des zweiten Transformatorelements (120) und der primärseitigen Wicklung (102) des zweiten Transformatorelements (120) derart ausgestaltet sind, dass eine zwischen dem zweiten sekundärseitigen Kontakt (142) und dem ersten sekundärseitigen Kontakt (141) angelegte positive Spannung folgendes bewirkt:
- Induktion einer ersten Spannung zwischen dem dritten primärseitigen Kontakt (133) und dem ersten primärseitigen Kontakt (131),
- Induktion einer zweiten Spannung zwischen dem zweiten primärseitigen Kontakt (132) und dem dritten primärseitigen Kontakt (133),
- wobei die erste Spannung eine gleiche Richtung im Vergleich zur Richtung der zweiten Spannung aufweist.

7. Vorrichtung nach Anspruch 6, **dadurch gekennzeichnet, dass** die zwischen dem zweiten sekundärseitigen Kontakt (142) und dem ersten sekundärseitigen Kontakt (141) angelegte positive Spannung folgendes bewirkt:
- Induktion der ersten Spannung als positive Spannung zwischen dem dritten primärseitigen Kontakt (133) und dem ersten primärseitigen Kontakt (131) und Induktion der zweiten Spannung als positive Spannung zwischen dem zweiten primärseitigen Kontakt (132) und dem dritten primärseitigen Kontakt (133); und
- Induktion der ersten Spannung als negative Spannung zwischen dem dritten primärseitigen Kontakt (133) und dem ersten primärseitigen Kontakt (131) und Induktion der zweiten Spannung als negative Spannung zwischen dem zweiten primärseitigen Kontakt (132) und dem dritten primärseitigen Kontakt (133).

8. Vorrichtung nach einem der vorangegangenen Ansprüche, **dadurch gekennzeichnet, dass** das Wicklungsverhältnis zwischen der primärseitigen Wicklung (101) des ersten Transformatorelements (110) und der primärseitigen Wicklung (102) des zweiten Transformatorelements (120), dass das Wicklungsverhältnis zwischen der ersten sekundärseitigen Wicklung (111) des ersten Transformatorelements (110) und der zweiten sekundärseitigen Wicklung (122) des zweiten Transformatorelements (120), und dass das Wicklungsverhältnis zwischen der zweiten sekundärseitigen Wicklung (112) des ersten Transformatorelements (110) und der ersten sekundärseitigen Wicklung (121) des zweiten Transformatorelements (120) jeweils ein Wicklungsverhältnis von näherungsweise 1:1 aufweisen.

9. Vorrichtung nach einem der vorangegangenen Ansprüche, **dadurch gekennzeichnet, dass** das Wicklungsverhältnis zwischen der ersten sekundärseitigen Wicklung (111) des ersten Transformatorelements (110) und der primärseitigen Wicklung (101) des ersten Transformatorelements (110) und dass das Wicklungsverhältnis zwischen der zweiten sekundärseitigen Wicklung (122) des zweiten Transformatorelements (120) und der primärseitigen Wicklung (102) des zweiten Transformatorelements (120) jeweils eines der folgenden Verhältnisse aufweist:
- näherungsweise 1:1; und
- näherungsweise zwischen 1:1 und 2:1.

10. Vorrichtung nach einem der vorangegangenen Ansprüche, **dadurch gekennzeichnet, dass** das Wicklungsverhältnis zwischen der zweiten sekundärseitigen Wicklung (112) des ersten Transformatorelements (110) und der primärseitigen (101) Wicklung des ersten Transformatorelements (110) und dass das Wicklungsverhältnis zwischen der ersten sekundärseitigen Wicklung (121) des zweiten Transformatorelements (120) und der primärseitigen Wicklung (102) des zweiten Transformatorelements (120) jeweils eines der folgenden Verhältnisse aufweist:
- näherungsweise 1:1; und
- näherungsweise zwischen 2:1 und 4:1.

11. Vorrichtung nach einem der vorangegangenen Ansprüche, **dadurch gekennzeichnet, dass** der erste primärseitige Kontakt (131) dazu eingerichtet ist, mit einem Leiter aus Phasenleiter und Neutralleiter verbunden zu werden, und der zweite primärseitige Kontakt (132) dazu eingerichtet ist, mit dem anderen Leiter aus Phasenleiter und Neutralleiter verbunden zu werden, und wobei der dritte primärseitige Kontakt (133) dazu eingerichtet ist, mit dem Schutzleiter verbunden zu werden.

12. Vorrichtung nach einem der vorangegangenen Ansprüche, **dadurch gekennzeichnet, dass** der Netzanschluss einen zu CEE 7/4 kompatiblen Schutzkontaktstecker umfasst.

13. Modem zur Übertragung von Daten über ein Stromversorgungsnetz, umfassend eine Vorrichtung nach einem der Ansprüche 1-12, wobei das Modem mit dem ersten und zweiten sekundärseitigen Kontakt (141, 142) der Vorrichtung zur Kopplung des Modems über einen ersten Übertragungskanal (K1) und das Modem mit dem dritten und vierten sekundärseitigen Kontakt (143, 144) zur Kopplung des Modems über einen zweiten Übertragungskanal (K2) an das Stromversorgungsnetz angeschlossen ist.

## Claims

1. Apparatus for coupling a modem to a power supply network for transmitting data via the power supply network, comprising:
- a mains connection (150) configured to connect the apparatus with a phase conductor, a neutral conductor and a protective earth conductor of the power supply network,
- a first transformer element (110) comprising a primary side winding (101) and a first secondary side winding (111),
- a second transformer element (120) comprising a primary side winding (102) and a first secondary side winding (121),
- wherein the primary side winding (101) of the first transformer element (110) is connected in series to the primary side winding (102) of the second transformer element (120),
- a first primary side contact (131) that is arranged at the end of the primary side winding (101) of the first transformer element (110) facing away from the primary side winding (102) of the second transformer element (120),
- a second primary side contact (132) that is arranged at the end of the primary side winding (102) of the second transformer element (120) facing away from the primary side winding (101) of the first transformer element (110),
**characterized in, that**
- the first transformer element (110) comprises a second secondary side winding (112) and the second transformer element (120) comprises a second secondary side winding (122);
- wherein the first secondary side winding (121) of the second transformer element (120) is connected in series to the second secondary side winding (112) of the first transformer element (110),
- wherein the first secondary side winding (111) of the first transformer element (110) is connected in series to the second secondary side winding (122) of the second transformer element (120); and the apparatus further comprising:
- a third primary side contact (133) that is arranged between the primary side winding (101) of the first transformer element (110) and the primary side winding (102) of the second transformer element (120),
- a first secondary side contact (141) that is arranged at the end of the first secondary side winding (111) of the first transformer element (110) facing away from the second secondary side winding (122) of the second transformer element (120),
- a second secondary side contact (142) that is arranged at the end of the second secondary side winding (122) of the second transformer element (120) facing away from the first secondary side winding (111) of the first transformer element (110),
- a third secondary side contact (143) that is arranged at the end of the second secondary side winding (112) of the first transformer element (110) facing away from the first secondary side winding (121) of the second transformer element (120),
- a fourth secondary side contact (144) that is arranged at the end of the first secondary side winding (121) of the second transformer element (120) facing away from the second secondary side winding (112) of the first transformer element (110),
- wherein the first primary side contact (131), the second primary side contact (132) and the third primary side contact (133) are each configured to be connected via the mains connection (150) to a different conductor chosen in each case from a phase conductor, a neutral conductor and a protective earth conductor of the power supply network,
- wherein the apparatus is configured to couple at least in terms of high frequency a first secondary side transmission channel (K1), which is formed between the first and second secondary side contact (141,142), to the power supply network via the first and second transformer element (110, 120); and
- wherein the apparatus is configured to couple at least in terms of high frequency a second secondary side transmission channel (K2), which is formed between the third and fourth secondary side contact (143, 144), to the power supply network via the first and second transformer element (110,120).

2. Apparatus according to claim 1, **characterized in that** the first transformer element (110, 110') and the second transformer element (120, 120') are each part of a joint multi-hole core transformer (510).

3. Apparatus according to claim 2, wherein the multi-hole core transformer (510) constitutes a double-hole core transformer (510) having a first hole (511) and a second hole (512), with the primary side winding (101') and the first and second secondary side windings (111', 112') of the first transformer element (110') being wound about the first hole (511) of the double-hole core transformer (510) and with the primary side winding (102') and the first and second secondary side winding (121', 122') of the second transformer element (120') being wound about the second hole (512) of the double-hole core transformer (510).

4. Apparatus according to one of the above claims, **characterized in that** the series connection of the first secondary side winding (121) of the second transformer element (120) and the second secondary side winding (112) of the first transformer element (110), the sense of winding between the first secondary side winding (121) of the second transformer element (120) and the primary side winding (102) of the second transformer element (120), and the sense of winding between the second secondary side winding (112) of the first transformer element (110) and the primary side winding (101) of the first transformer element (110) are arranged such that a positive voltage applied between the fourth secondary side contact (144) and the third secondary side contact (143) causes the following:
- induction of a first voltage between the third primary side contact (133) and the first primary side contact (131),
- induction of a second voltage between the second primary side contact (132) and the third primary side contact (133),
- with the first voltage having a reverse direction compared to the direction of the second voltage.

5. Apparatus according to claim 4, **characterized in that** the positive voltage applied between the fourth secondary side contact (144) and the third secondary side contact (143) causes the following:
- induction of the first voltage as negative voltage between the third primary side contact (133) and the first primary side contact (131), and induction of the second voltage as positive voltage between the second primary side contact (132) and the third primary side contact (133); and
- induction of the first voltage as positive voltage between the third primary side contact (133) and the first primary side contact (131), and induction of the second voltage as negative voltage between the second primary side contact (132) and the third primary side contact (133).

6. Apparatus according to one of claims 1 to 4, **characterized in that** the series connection of the first secondary side winding (111) of the first transformer element (110) and the second secondary side winding (122) of the second transformer element (120), the sense of winding between the first secondary side winding (111) of the first transformer element (110) and the primary side winding (101) of the first transformer element (110), and the sense of winding between the second secondary side winding (122) of the second transformer element (120) and the primary side winding (102) of the second transformer element (120) are arranged such that a positive voltage applied between the second secondary side contact (142) and the first secondary side contact (141) causes the following:
- induction of a first voltage between the third primary side contact (133) and the first primary side contact (131),
- induction of a second voltage between the second primary side contact (132) and the third primary side contact (133),
- with the first voltage having the same direction compared to the direction of the second voltage.

7. Apparatus according to claim 6, **characterized in that** the positive voltage applied between the second secondary side contact (142) and the first secondary side contact (141) causes the following:
- induction of the first voltage as positive voltage between the third primary side contact (133) and the first primary side contact (131), and induction of the second voltage as positive voltage between the second primary side contact (132) and the third primary side contact (133); and
- induction of the first voltage as negative voltage between the third primary side contact (133) and the first primary side contact (131), and induction of the second voltage as negative voltage between the second primary side contact (132) and the third primary side contact (133).

8. Apparatus according to one of the above claims, **characterized in that** the winding ratio between the primary side winding (101) of the first transformer element (110) and the primary side winding (102) of the second transformer element (120), the winding ratio between the first secondary side winding (111) of the first transformer element (110) and the second secondary side winding (122) of the second transformer element (120), and the winding ratio between the second secondary side winding (112) of the first transformer element (110) and the first secondary side winding (121) of the second transformer element (120) is approximately 1:1.

9. Apparatus according to one of the above claims, **characterized in that** the winding ratio between the first secondary side winding (111) of the first transformer element (110) and the primary side winding (101) of the first transformer element (110) and the winding ratio between the second secondary side winding (122) of the second transformer element (120) and the primary side winding (102) of the second transformer element (120) each show one of the following ratios:
- approximately 1:1; and
- approximately between 1:1 and 2:1.

10. Apparatus according to one of the above claims, **characterized in that** the winding ratio between the second secondary side winding (112) of the first transformer element (110) and the primary side winding (101) of the first transformer element (110) and the winding ratio between the first secondary side winding (121) of the second transformer element (120) and the primary side winding (102) of the second transformer element (120) each show one of the following ratios:
- approximately 1:1; and
- approximately between 2:1 and 4:1.

11. Apparatus according to one of the above claims, **characterized in that** the first primary side contact (131) is arranged for being connected to a conductor chosen from a phase conductor and neutral conductor and that the second primary side contact (132) is arranged for being connected to the other conductor chosen from a phase conductor and neutral conductor, with the third primary side contact (133) being arranged to be connected to the protective earth conductor.

12. Apparatus according to one of the above claims, **characterized in that** the mains connection comprises a CEE 7/4 compatible safety plug.

13. Modem for transmitting data via a power supply network comprising an apparatus according to one of claims 1-12, with the modem being connected to the power supply network via the first transmission channel (K1) with the first and second secondary side contact (141,142) of the apparatus for coupling the modem, and with the modem being connected to the power supply network via the second transmission channel (K2) with the third and fourth secondary side contact (143, 144) for coupling the modem.

## Revendications

1. Dispositif servant au couplage d'un modem à un réseau d'alimentation en courant électrique, pour la transmission de donnés via le réseau d'alimentation en courant électrique, comprenant :
- un raccordement au réseau (150) qui est agencé de manière à raccorder le dispositif comprenant un conducteur de phase, un conducteur neutre et un conducteur de protection du réseau d'alimentation en courant électrique,
- un premier élément de transformateur (110) comportant un enroulement côté primaire (101) et un premier enroulement côté secondaire (111),
- un deuxième élément de transformateur (120) comportant un enroulement côté primaire (102) et un premier enroulement côté secondaire (121),
- où l'enroulement côté primaire (101) du premier élément de transformateur (110) est raccordé en série à l'enroulement côté primaire (102) du deuxième élément de transformateur (120),
- un premier contact côté primaire (131) qui est disposé au niveau de l'extrémité de l'enroulement côté primaire (101) du premier élément de transformateur (110), ladite extrémité étant placée à l'opposé de l'enroulement côté primaire (102) du deuxième élément de transformateur (120),
- un deuxième contact côté primaire (132) qui est disposé au niveau de l'extrémité de l'enroulement côté primaire (102) du deuxième élément de transformateur (120), ladite extrémité étant placée à l'opposé de l'enroulement côté primaire (101) du premier élément de transformateur (110), **caractérisé en ce que**
- le premier élément de transformateur (110) comprend un deuxième enroulement côté secondaire (112) et le deuxième élément de transformateur (120) comprend un deuxième enroulement côté secondaire (122),
- où le premier enroulement côté secondaire (121) du deuxième élément de transformateur (120) est raccordé en série au deuxième enroulement côté secondaire (112) du premier élément de transformateur (110),
- où le premier enroulement côté secondaire (111) du premier élément de transformateur (110) est raccordé en série au deuxième enroulement côté secondaire (122) du deuxième élément de transformateur (120) ; et le dispositif comprend en outre :
- un troisième contact côté primaire (133) qui est disposé entre l'enroulement côté primaire (101) du premier élément de transformateur (110), et l'enroulement côté primaire (102) du deuxième élément de transformateur (120),
- un premier contact côté secondaire (141) qui est disposé au niveau de l'extrémité du premier enroulement côté secondaire (111) du premier élément de transformateur (110), ladite extrémité étant placée à l'opposé du deuxième enroulement côté secondaire (122) du deuxième élément de transformateur (120),
- un deuxième contact côté secondaire (142) qui est disposé au niveau de l'extrémité du deuxième enroulement côté secondaire (122) du deuxième élément de transformateur (120), ladite extrémité étant placée à l'opposé du premier enroulement côté secondaire (111) du premier élément de transformateur (110),
- un troisième contact côté secondaire (143) qui est disposé au niveau de l'extrémité du deuxième enroulement côté secondaire (112) du premier élément de transformateur (110), ladite extrémité étant placée à l'opposé du premier enroulement côté secondaire (121) du deuxième élément de transformateur (120),
- un quatrième contact côté secondaire (144) qui est disposé au niveau de l'extrémité du premier enroulement côté secondaire (121) du deuxième élément de transformateur (120), ladite extrémité étant placée à l'opposé du deuxième enroulement côté secondaire (112) du premier élément de transformateur (110),
- où le premier contact côté primaire (131), le deuxième contact primaire (132) et le troisième contact côté primaire (133), respectivement, sont agencés de manière à être connectés, respectivement, via le raccordement au réseau (150), à un conducteur différent parmi ceux formant un conducteur de phase, un conducteur neutre et un conducteur de protection du réseau d'alimentation en courant électrique,
- où le dispositif est agencé de manière à coupler au réseau d'alimentation en courant électrique, au moins à haute fréquence, via le premier et le deuxième élément de transformateur (110, 120), un premier canal de transmission côté secondaire (K1) qui est configuré entre le premier et le deuxième contact côté secondaire (141, 142) ; et
- où le dispositif est agencé de manière à coupler au réseau d'alimentation en courant électrique, au moins à haute fréquence, via le premier et le deuxième élément de transformateur (110, 120), un deuxième canal de transmission côté secondaire (K2) qui est configuré entre le troisième et le quatrième contact côté secondaire (143, 144).

2. Dispositif selon la revendication 1, **caractérisé en ce que** le premier élément de transformateur (110, 110') et le deuxième élément de transformateur (120, 120') font partie à chaque fois d'un transformateur à noyau commun à plusieurs trous (510).

3. Dispositif selon la revendication 2, où le transformateur à noyau à plusieurs trous (510) représente un transformateur à noyau à double trou (510) qui présente un premier trou (511) et un second trou (512), où l'enroulement côté primaire (101') et les premier et deuxième enroulements côté secondaire (111', 112') du premier élément de transformateur (110') sont enroulés autour du premier trou (511) du transformateur à noyau à double trou (510), et où l'enroulement côté primaire (102') et les premier et deuxième enroulements côté secondaire (121', 122') du deuxième élément de transformateur (120') sont enroulés autour du second trou (512) du transformateur à noyau à double trou (510).

4. Dispositif selon l'une quelconque des revendications précédentes, **caractérisé en ce que** le montage en série du premier enroulement côté secondaire (121) du deuxième élément de transformateur (120) et du deuxième enroulement côté secondaire (112) du premier élément de transformateur (110), le sens d'enroulement entre le premier enroulement côté secondaire (121) du deuxième élément de transformateur (120), et l'enroulement côté primaire (102) du deuxième élément de transformateur (120), et le sens d'enroulement entre le deuxième enroulement côté secondaire (112) du premier élément de transformateur (110), et l'enroulement côté primaire (101) du premier élément de transformateur (110), sont conçus de manière telle, qu'une tension positive appliquée entre le quatrième contact côté secondaire (144) et le troisième contact côté secondaire (143) déclenche ce qui suit :
- induction d'une première tension entre le troisième contact côté primaire (133) et le premier contact côté primaire (131),
- induction d'une deuxième tension entre le deuxième contact côté primaire (132) et le troisième contact côté primaire (133),
- où la première tension présente une direction inversée par rapport à la direction de la deuxième tension.

5. Dispositif selon la revendication 4, **caractérisé en ce que** la tension positive appliquée entre le quatrième contact côté secondaire (144) et le troisième contact côté secondaire (143) déclenche ce qui suit :
- induction de la première tension comme tension négative entre le troisième contact côté primaire (133) et le premier contact côté primaire (131), et induction de la deuxième tension comme tension positive entre le deuxième contact côté primaire (132) et le troisième contact côté primaire (133) ; et
- induction de la première tension comme tension positive entre le troisième contact côté primaire (133) et le premier contact côté primaire (131), et induction de la deuxième tension comme tension négative entre le deuxième contact côté primaire (132) et le troisième contact côté primaire (133).

6. Dispositif selon l'une quelconque des revendications 1 à 4, **caractérisé en ce que** le montage en série du premier enroulement côté secondaire (111) du premier élément de transformateur (110) et du deuxième enroulement côté secondaire (122) du deuxième élément de transformateur (120), le sens d'enroulement entre le premier enroulement côté secondaire (111) du premier élément de transformateur (110), et l'enroulement côté primaire (101) du premier élément de transformateur (110), et le sens d'enroulement entre le deuxième enroulement côté secondaire (122) du deuxième élément de transformateur (120), et l'enroulement côté primaire (102) du deuxième élément de transformateur (120), sont configurés de manière telle, qu'une tension positive appliquée entre le deuxième contact côté secondaire (142) et le premier contact côté secondaire (141) déclenche ce qui suit :
- induction d'une première tension entre le troisième contact côté primaire (133) et le premier contact côté primaire (131),
- induction d'une deuxième tension entre le deuxième contact côté primaire (132) et le troisième contact côté primaire (133),
- où la première tension présente une tension identique par rapport à la direction de la deuxième tension.

7. Dispositif selon la revendication 6, **caractérisé en ce que** la tension positive appliquée entre le deuxième contact côté secondaire (142) et le premier contact côté secondaire (141) déclenche ce qui suit :
- induction de la première tension comme tension positive entre le troisième contact côté primaire (133) et le premier contact côté primaire (131), et induction de la deuxième tension comme tension positive entre le deuxième contact côté primaire (132) et le troisième contact côté primaire (133) ; et
- induction de la première tension comme tension négative entre le troisième contact côté primaire (133) et le premier contact côté primaire (131), et induction de la deuxième tension comme tension négative entre le deuxième contact côté primaire (132) et le troisième contact côté primaire (133).

8. Dispositif selon l'une quelconque des revendications précédentes, **caractérisé en ce que** le rapport d'enroulement entre l'enroulement côté primaire (101) du premier élément de transformateur (110), et l'enroulement côté primaire (102) du deuxième élément de transformateur (120), **en ce que** le rapport d'enroulement entre le premier enroulement côté secondaire (111) du premier élément de transformateur (110), et le deuxième enroulement côté secondaire (122) du deuxième élément de transformateur (120), et **en ce que** le rapport d'enroulement entre le deuxième enroulement côté secondaire (112) du premier élément de transformateur (110), et le premier enroulement côté secondaire (121) du deuxième élément de transformateur (120), présentent respectivement un rapport d'enroulement approximativement de 1:1.

9. Dispositif selon l'une quelconque des revendications précédentes, **caractérisé en ce que** le rapport d'enroulement entre le premier enroulement côté secondaire (111) du premier élément de transformateur (110), et l'enroulement côté primaire (101) du premier élément de transformateur (110), et **en ce que** le rapport d'enroulement entre le deuxième enroulement côté secondaire (122) du deuxième élément de transformateur (120), et l'enroulement côté primaire (102) du deuxième élément de transformateur (120), présentent respectivement l'un des rapports suivants :
- approximativement de 1:1 ; et
- approximativement entre 1:1 et 2:1.

10. Dispositif selon l'une quelconque des revendications précédentes, **caractérisé en ce que** le rapport d'enroulement entre le deuxième enroulement côté secondaire (112) du premier élément de transformateur (110), et l'enroulement côté primaire (101) du premier élément de transformateur (110), et **en ce que** le rapport d'enroulement entre le premier enroulement côté secondaire (121) du deuxième élément de transformateur (120), et l'enroulement côté primaire (102) du deuxième élément de transformateur (120), présentent respectivement l'un des rapports suivants :
- approximativement de 1:1 ; et
- approximativement entre 2:1 et 4:1.

11. Dispositif selon l'une quelconque des revendications précédentes, **caractérisé en ce que** le premier contact côté primaire (131) est agencé de manière à être connecté à l'un des conducteurs parmi ceux formant le conducteur de phase et le conducteur neutre, et le deuxième contact côté primaire (132) est agencé de manière à être connecté à l'autre conducteur parmi ceux formant le conducteur de phase et le conducteur neutre, et où le troisième contact côté primaire (133) est agencé de manière à être connecté au conducteur de protection.

12. Dispositif selon l'une quelconque des revendications précédentes, **caractérisé en ce que** le raccordement au réseau comprend un connecteur de protection compatible CEE 7/4.

13. Modem servant à la transmission de données via un réseau d'alimentation en courant électrique, comprenant un dispositif selon l'une quelconque des revendications 1 à 12, où le modem, par le premier et deuxième contact côté secondaire (141, 142) du dispositif servant au couplage du modem via un premier canal de transmission (K1), et le modem, par le troisième et quatrième contact côté secondaire (143, 144) du dispositif servant au couplage du modem via un deuxième canal de transmission (K2), est raccordé au réseau d'alimentation en courant électrique.
